Europäisches Patentamt

European Patent Office

Office européen des brevets

(19)

(11) **EP 1 105 278 B1**

(12) **EUROPÄISCHE PATENTSCHRIFT**

(45) Veröffentlichungstag und Bekanntmachung des Hinweises auf die Patenterteilung:
**19.02.2003 Patentblatt 2003/08**

(51) Int Cl.7: **B29C 47/92**, B29C 47/90

(21) Anmeldenummer: **99939255.8**

(86) Internationale Anmeldenummer:
**PCT/AT99/00203**

(22) Anmeldetag: **18.08.1999**

(87) Internationale Veröffentlichungsnummer:
**WO 00/010794 (02.03.2000 Gazette 2000/09)**

(54) **VERFAHREN ZUR HERSTELLUNG VON LÄNGLICHEN GEGENSTÄNDEN AUS KUNSTSTOFF**

METHOD FOR PRODUCING ELONGATED OBJECTS MADE OF PLASTIC MATERIAL

PROCEDE DE PRODUCTION D'OBJETS LONGS EN PLASTIQUE

(84) Benannte Vertragsstaaten:
**AT DE**

(30) Priorität: **19.08.1998 AT 141798**

(43) Veröffentlichungstag der Anmeldung:
**13.06.2001 Patentblatt 2001/24**

(73) Patentinhaber: **Greiner Extrusionstechnik GmbH
4550 Kremsmünster (AT)**

(72) Erfinder: **LANGECKER, Günter, R.
A-8700 Leoben (AT)**

(74) Vertreter: **Secklehner, Günter, Dr.
Rechtsanwalt,
Pyhrnstrasse 1
8940 Liezen (AT)**

(56) Entgegenhaltungen:
| | |
|---|---|
| **WO-A-94/16872** | **DE-A- 19 825 892** |
| **US-A- 4 514 812** | **US-A- 4 721 589** |

**Beschreibung**

Die Erfindung bezieht sich auf ein Verfahren zum Regeln des Geliergrades bzw. MFI/MVI der Schmelze zur Herstellung von länglichen Gegenständen, Vollprofilen, Hohlprofilen insbesondere für den Fensterbau, aus Kunststoff, wie dies in den Ansprüchen 1, 2 und 13 beschrieben wird.

Aus der WO 94/16872 A1 ist eine Anlage für die Verarbeitung von Kunststoffmaterialien im Extrusionsverfahren bekannt geworden, bei welchem das zur Bildung der Schmelze vorgesehene Ausgangsmaterial vor dem Eintritt in einen gleichlaufenden Doppelschneckenextruder vorerhitzt und im unmittelbaren Anschluß in diesem gleichlaufenden Doppelschneckenextruder entsprechend aufbereitet wird. Weiters sind über die Längserstreckung des Doppelschneckenextruders diesem zusätzliche elektrische Heizelemente zugeordnet, wodurch dem durch den Extruder hindurchtretenden Material zusätzlich noch Wärme von außen zugeführt werden kann. Wesentlich dabei ist, daß das zur Bildung des Gegenstandes vorgesehene Ausgangsmaterial vor dem Eintritt in den Extruder vorerwärmt wird.

Eine andere Anlage zur Herstellung von extrudierten Gegenständen ist aus der US 4,721,589 A bekannt geworden, bei welcher eine gleichmäßige Ausstoßleistung durch eine vor der Extrusionsdüse angeordnete Zahnradpumpe sichergestellt wird. Der Extruderschnecke sind dabei über deren Längserstreckung mehrere Temperierelemente zugeordnet, durch welche es möglich ist, einerseits dem Kunststoffmaterial Wärme zuzuführen und andererseits falls eine zu hohe Temperatur des Kunststoffmaterials auf Grund des Knetvorganges durch die Extruderschnecke vorliegt, das Material entsprechend zu kühlen. Die Zahnradpumpe liefert auf Grund einer voreingestellten fixen Drehzahl einen konstanten Volumenstrom des aufbereiteten Materials pro Zeiteinheit. Zur Erzielung einer vorbestimmbaren Viskosität der Kunststoffschmelze, welche durch eine Wechselbeziehung zwischen dem Volumenstrom und dem Druck bestimmt wird, wird im Bereich zwischen der Extrusionsdüse und der Zahnradpumpe die Viskosität der Schmelze ermittelt und auf Grund dieses Wertes erfolgt die Zu- bzw. Abfuhr von Wärme im Bereich der Extruderschnecke. Zur Erzielung eines gleichmäßigen Druckes, mit welchem das Material aus der Extrusionsdüse abgegeben wird, wird dieser zwischen der Extrusionsdüse und der Zahnradpumpe ermittelt, wobei in Wechselbeziehung zwischen der Viskosität und dem aufgebauten Druck die dem Material während dem Durchtritt durch die Extruderschnecke zugeführte bzw. abgeführte Wärmemenge entsprechend festgelegt werden kann. Bei diesem Verfahrensablauf, bzw. der Anlage konnten nicht in allen Anwendungsfällen gleichmäßige Produkteigenschaften des hergestellten Gegenstandes erzielt werden.

Eine Extrusionsdüse für eine Schmelze zur Herstellung eines aus einem plastifizierten Kunststoff gebildeten Gegenstandes ist aus der DE 198 25 892 A1 der gleichen Anmelderin bekannt geworden, bei welcher das Extrusionswerkzeug bzw. die Extrusionsdüse in Extrusionsrichtung hintereinander angeordnete Teilabschnitte mit einem Kanal und diesen begrenzenden Wandungen gebildet ist, wobei in Extrusionsrichtung die zweiten Teilabschnitte von den diesen vorgeordneten ersten Teilabschnitten thermisch getrennt sind. Zusätzlich sind noch einzelnen dieser Wandungen des zweiten Teilabschnittes Wärmeentzugsvorrichtung zugeordnet, um die Temperatur der dem Gegenstand zugewandten Wandungen auf einer Temperatur zu halten, welche unterhalb jener Temperatur deren diesem Kanal vorgeordneten Wandungen liegt. Dadurch wird eine Überhitzung des durch das Extrusionswerkzeug hindurchtretenden Kunststoffmaterials im zweiten Teilabschnitt der Extrusionsdüse verhindert und so ein Wandgleiten des an den Wandungen entlanggeführten Schmelzestroms erzielt.

Aus dem Fachartikel "Aufbereitung von PVC" aus dem Carl Hanser Verlag München 1985, Seiten 258 bis 263 ist zu entnehmen, daß die Aufbereitung von PVC in einen 3-Stufen-Prozeß, nämlich in Voraufbereitung, Endaufbereitung sowie Gelierung unterteilt werden kann. Dabei stellt der Geliergrad des Kunststoffmaterials während dem, Aufbereitungsvorgang einen wesentlichen Kennwert für die Erzielung hochwertiger Produkteigenschaften, insbesondere der Festigkeitseigenschaften und mechanischen Werte dar. Dabei sind die verschiedensten Probenentnahmen sowie Meßverfahren zur Ermittlung des Geliergrades sowie die Möglichkeit der Aufbereitung des Kunststoffmaterials in einem Scherenwalzwerk zur homogenen Scherung beschrieben.

Aus dem Fachbuch "Kunststoff-Maschinen-Führer" des Carl Hanser Verlages München Wien, 2. Ausgabe aus dem Jahr 1984, ist es bekannt, Doppelschneckenextruder zur Verarbeitung thermoplastischer Kunststoffe zu verwenden, welche zwei miteinander in Eingriff stehende, kämmende Schnecken aufweisen. Dabei schließt der Kopfdurchmesser einer Schnecke in etwa an den Kerndurchmesser der Nachbarschnecke an. Nach dem Abstand der Kopf- und Kerndurchmesser sowie der Schneckenflanken zueinander unterscheidet man dicht und weniger dicht kämmende Schnecken. Dabei kommt eine praktische Bedeutung bei der Verarbeitung zu Halbzeugen der gegenläufigen Doppelschnecke zu. Durch diese gegenläufige Drehbewegung der beiden Schnecken zueinander kommt es zu einer Zwangsförderung, welche durch ein mehr oder weniger großes Spiel zwischen den Stegflanken bzw. am Kopfdurchmesser bestimmt wird. Da bei den Hohlprofilen für den Fensterbau zumeist PVC als Werkstoff für den Gegenstand gewählt wird und das Rohmaterial überwiegend in Pulverform vorliegt, sind bei den bekannten Anlagen Doppelschneckenextruder mit gegenläufiger Schneckenbewegung bei der PVC-Extrusion dominierend. Durch diese Zwangsförderung wird ein enges Verweilzeitspektrum erreicht, da dies aufgrund der beschränkten thermischen Stabilität von PVC einen weiteren Vorteil darstellt. In Verbindung mit der Zwangsförderung im Bereich der gegenläufigen Schnecken und der Schneckengeometrie wird innerhalb des Extrusionszylinders ein Druck aufgebaut, welcher dazu dient, den Durchtritt der plastifizierten Schmele im Anschluß an den Austritt aus dem Extrusionszylinder durch die Extrusionsdüse hindurch zu gewährleisten. Dabei baut der gegenläufige Doppelschnekkenextruder einen Druck bis zu 300 bar und höher auf. Aufgrund der Zwangsförderung und des unmittelbar damit verbundenen Volumenstroms konnte nicht in allen Anwedungsfäilen eine optimale Aufbereitung des verwendeten Rohstoffes hin zur plastifizierten Schmelze sowie geforderte Festigkeitskennwerte erzielt werden.

Der vorliegenden Erfindung liegt die Aufgabe zugrunde, ein Verfahren zum Regeln des Geliergrades bzw. MFI/MVI der Schmelze zur Herstellung von Gegenständen zu schaffen, bei dem es ermöglicht wird, unter Einhaltung eines wirtschaftlichen Verfahrensablaufes vorbestimmbare Produkteigenschaften im geformten sowie ausgehärteten Zustand zu erzielen.

Diese Aufgabe der Erfindung wird durch die Merkmale des Anspruches 1 gelöst. Der sich durch die Merkmale des Kennzeichenteiles des Anspruches 1 ergebende überraschende Vorteil liegt nunmehr darin, daß der vorbestimmbare Geliergrad bzw. MFI/MVI der Kunststoffschmelze durch einander beeinflussende Verfahrensparameter der unterschiedlichen Anlagenteile getrennt und unabhängig von der Abgabe der Kunststoffschmelze erfolgt. Dabei erfolgt die Aufbereitung des Rohmaterials hin zur Schmelze rohstoffspezifisch und unabhängig von der zur Herstellung notwendigen Austoßleistung bzw. dem Volumenstrom. Durch die zeitliche sowie räumliche Trennung von der Aufbereitung sowie der Gelierung und der nachfolgenden Erzeugung des Förderdrukkes bzw. Fördervolumens ist es nunmehr auf einfache Art und Weise möglich, die Aufbereitung und die damit verbundene Festlegung des Geliergrades bzw. MFI/MVI nahezu vollständig getrennt von der abgegebenen Menge an vollständig aufbereiteter bzw. einen hohen Grad an Gelierung aufweisender Schmelze durchzuführen. Dabei wirken sich je nach herzustellendem Profil auch hohe bzw. niedrigere Massendurchsätze nicht negativ auf die vorbestimmbaren Produkteigenschaften aus, da die Aufbereitung und die nachfolgende Förderung voneinander getrennt und unabhängig erfolgt. Weiters wird es dadurch ermöglicht, daß mit einer Anlage unterschiedliche Rohmaterialien und/oder Mischungen daraus verarbeitbar sind und trotzdem ein voreinstellbarer Geliergrad bzw. MFI/MVI durch die zueinander unterschiedlichen Einflußgrößen gewährleistet werden kann.

Die Aufgabe der Erfindung wird aber eigenständig auch durch die Merkmale des Anspruches 2 gelöst. Die sich aus der Merkmalskombination der kennzeichnenden Merkmale ergebenden überraschenden Vorteile liegen darin, daß infolge der Abhängigkeit des Geliergrades von den zu erzielenden Produkteigenschaften, wie beispielsweise Festigkeitseigenschaften, die einander beeinflussenden Verfahrensparameter in eigenen Speichervorrichtungen hinterlegt sind und eine standige Überwachung dieser den Geliergrad bestimmenden Verfahrensparameter erfolgt und so eine stetige Angleichung der ermittelten Ist-Werte an die vorgegebenen Soll-Werte erfolgen kann und so eine einwandfreie Produktqualität sichergestellt ist.

Vorteilhaft sind auch Verfahrensvarianten gemäß den Ansprüchen 3 bis 11, wodurch durch Veränderung des Füllgrades bzw. durch Steuerung der Verweilzeit und damit verbunden durch Änderung, des Geliergrades eine feinfühlige Regelung des Extrusionsprozesses ohne Veränderung der Anlagenteile ermöglicht wird.

Ein weiterer vorteilhafter Verfahrensschritt ist im Anspruch 12 beschrieben, durch welchen es möglich ist, eine noch homogenere Schmelze auszubilden und so die Produkteigenschaften, insbesondere die Festigkeitseigenschaft noch zu verbessern.

Die Erfindung wird aber auch eigenständig durch die Merkmale nach Anspruch 13 gelöst, wodurch über eine kapazitive Messung der Dielektrizitätszahl der Schmelze bzw. des extrudierten Gegenstandes ein Rückschluß auf den in der Aufbereitungseinrichtung erzielten Geliergrad getroffen werden kann und so über eine Steuer- bzw. Regeleinrichtung der Geliergrad über eine Ansteuerung des Antriebsmotors der Aufbereitungseinrichtung, insbesondere eine Veränderung der Extruderschneckendrehzahl, verändert werden kann.

Weitere vorteilhafte Verfahrensschritte sind den Ansprüchen 14 bis 18 gekennzeichnet, wobei die dabei erzielbaren Vorteile der entsprechenden Detailbeschreibung zu entnehmen sind.

Die Erfindung wird im nachfolgenden anhand der in den Zeichnungen dargestellten Ausführungsbeispiele näher erläutert.

Es zeigen:

Fig. 1    eine Extrusionsanlage gemäß dem bekannten Stand der Technik, in Seitenansicht und vereinfachter, schematischer Darstellung;

Fig. 2    eine erfindungsgemäße Extrusionsanlage in Seitenansicht und vereinfachter, schematischer Darstellung;

Fig. 3    einen Teil der Extrusionsanlage nach Fig. 2, in Seitenansicht und stark vereinfachter, schematischer Darstellung;

Fig. 4    ein Diagramm für die Abhängigkeit des Geliergrades von der Schnecken-drehzahl;

Fig. 5    ein Diagramm für die Abhängigkeit des Geliergrades von der spezifischen Antriebsleistung;

Fig. 6 ein Diagramm für die Abhängigkeit des Geliergrades von der spezifischen Heizleistung;

Fig. 7 ein Diagramm für die Abhängigkeit des Geliergrades von der Summe der spezifischen Antriebsleistung und der spezifischen Heizleistung;

Fig. 8 eine erfindungsgemäße Anordnung in Stirnansicht geschnitten gemäß den Linien VIII - VIII in Fig. 2 zur Messung einer elektrischen Kenngröße des extrudierten Gegenstandes;

Fig. 9 ein Diagramm für die Abhängigkeit des Geliergrades von der Dielektrizitätszahl des Gegenstandes;

Fig. 10 eine erfindungsgemäße Anordnung zur Messung der Temperatur bzw. Wandstärke des Gegenstandes, in Stirnansicht geschnitten und stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

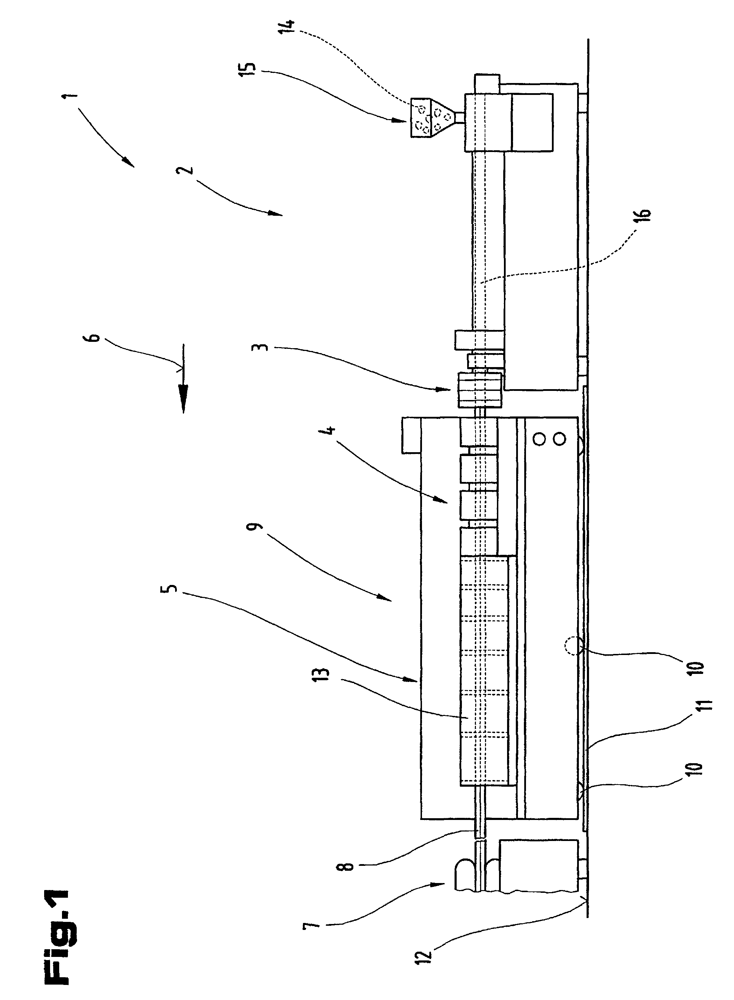

In der Fig. 1 ist eine bekannte Extrusionsanlage 1 gezeigt, die aus einer Aufbereitungseinrichtung 2, wie hier aus einem Extruder, einer dieser nachgeschalteten Formgebungsvorrichtung 3, wie z.B. ein Extrusionswerkzeug sowie einer Kalibriervorrichtung 4 und einer Kühlvorrichtung 5 besteht. Der Kühlvorrichtung 5 ist in Extrusionsrichtung 6 - gemäß eingetragenem Pfeil - ein schematisch und vereinfacht dargestellter Raupenabzug 7 nachgeordnet, mit welchem ein Gegenstand 8, beispielsweise ein Profil aus Kunststoff für den Fensterbau, ausgehend von der Formgebungsvorrichtung 3 bzw. dem Extrusionswerkzeug durch die Kalibriervorrichtung 4 sowie Kühlvorrichtung 5 abgezogen werden kann und mittels nicht näher dargestellten Ein- bzw. Vorrichtungen, wie beispielsweise Sägen und dgl., entsprechend abgelängt werden kann.

Die Kalibriervorrichtung 4 sowie Kühlvorrichtung 5 der Extrusionsanlage 1 sind auf einem vereinfacht dargestellten Kalibriertisch 9 angeordnet bzw. auf diesem gehaltert, wobei sich der Kalibriertisch 9 über vereinfacht dargestellte Laufrollen 10 und diesen zugeordneten Fahrschienen 11 auf einer schematisch angedeuteten Aufstandsfläche 12 abstützt bzw. auflagert. Diese Aufstandsfläche 12 ist zumeist ein ebener Hallenboden, auf welchem auch der Extruder, welcher auch als Plastifiziervorrichtung bezeichnet werden kann, sowie der Raupenabzug 7 usw. abgestützt sind.

Die Kalibriervorrichtung 4 kann aus einzelnen in Extrusionsrichtung 6 hintereinander angeordneten Kalibrierwerkzeugen gebildet und auf einer Aufnahmeplatte abgestützt sein und beispielsweise als Vakuumkalibrierung ausgebildet sein, wobei die Kalibrierung des extrudierten Gegenstandes 8 in bekannter Weise innerhalb der einzelnen Kalibrierwerkzeuge erfolgt. Dabei kann die Anordnung der Vakuumschlitze, der Kühlabschnitte und Kühlbohrungen sowie deren Anschlüsse und Versorgung gemäß dem bekannten Stand der Technik erfolgen. Diese Kalibrierung kann beispielsweise eine Kombination aus Trocken- und Naßkalibrierung bzw. nur eine vollständige Trockenkalibrierung umfassen. Weiters kann auch ein Zutritt von Umgebungsluft, ausgehend vom Extrusionswerkzeug bis hin zum Austritt aus der Kalibriervorrichtung 4 vollständig verhindert werden.

Die Kühlvorrichtung 5 für den aus der Kalibriervorrichtung 4 austretenden Gegenstand 8 umfaßt eine Kühlkammer 13, welche durch ein vereinfacht dargestelltes Gehäuse gebildet ist und durch im Innenraum der Kühlkammer 13 angeordnete und vereinfacht dargestellte Stützblenden in unmittelbar aufeinanderfolgende Bereiche unterteilt ist. Es ist aber auch möglich, den Innenraum der Kühlkammer 13 auf einen gegenüber dem atmosphärischen Luftdruck liegenden Druck abzusenken.

Der Gegenstand 8 besteht bevorzugt zumeist aus einem thermoplastischen Kunststoff 14, wobei das Roh- bzw. Ausgangsmaterial in Granulatform bzw. Pulverform in einem Aufnahmebehälter 15 der Aufbereitungseinrichtung 2 bevorratet ist und mittels mehrerer Förderschnecken 16 innerhalb der Aufbereitungseinrichtung 2 entsprechend erweicht bzw. plastifiziert und daran anschließend aus dem Extrusionswerkzeug der Formgebungsvorrichtung 3 ausgetragen wird. Der zur Bildung des Gegenstandes 8 verwendete Kunststoff wird bevorzugt aus der Gruppe des PVC (Polyvinylchlorid) gewählt, wobei sowohl Hart - PVC als auch Weich - PVC einsetzbar ist. Dieser erweichte bzw. plastische Kunststoff 14 weist nach dem Austritt aus dem Extrusionswerkzeug eine durch das Extrusionswerkzeug vorgegebene Querschnittsform auf, welche in der darin anschließenden Kalibriervorrichtung 4 entsprechend kalibriert und/oder gekühlt wird, bis der zähplastische Gegenstand 8 oberflächlich soweit abgekühlt ist, sodaß seine Außenform stabil sowie in ihren Abmessungen entsprechend ausgebildet ist. Anschließend an die Kalibriervorrichtung 4 durchläuft der Gegenstand 8 die Kühlvorrichtung 5, um eine weitere Abkühlung und gegebenenfalls Kalibrierung zu erreichen, um die endgültige Querschnittsform des Gegenstandes 8 festzulegen.

Der bisher in bekannter Weise eingesetzte Extruder als Aufbereitungseinrichtung 2 wird durch einen Doppelschneckenextruder gebildet, wobei die beiden Schnecken ineinandergreifend ausgebildet sind und zueinander eine gegenläufige Drehrichtung aufweisen. Durch diese gegenläufige Drehbewegung der beiden Schnecken zueinander kommt es zu einer Zwangsförderung, welche durch mehr oder weniger großes Spiel zwischen den Stegflanken bzw. am Kopfdurchmesser bestimmt wird. Da bei den Hohlprofilen für den Fensterbau zumeist PVC als Werkstoff für den Gegenstand 8 gewählt wird, ist der Doppelschneckenextruder mit gegenläufiger Schneckenbewegung bei der PVC-Extrusion dominierend. Durch die Zwangsförderung wird ein enges Verweilzeitspektrum erreicht, da dies aufgrund der beschränkten, thermischen Stabilität von PVC einen weiteren Vorteil darstellt. In Verbindung mit der Zwangsförderung und der Schneckengeometrie wird innerhalb des Extrusionszylinders am Schneckenende ein Druck aufgebaut, um den Durchtritt der plastifizierten Schmelze durch den innerhalb der Formgebungsvorrichtung 3 aufgebauten Widerstand zu überwinden, wobei dabei Drücke bis zu 300 bar und auch höher aufgebaut werden müssen.

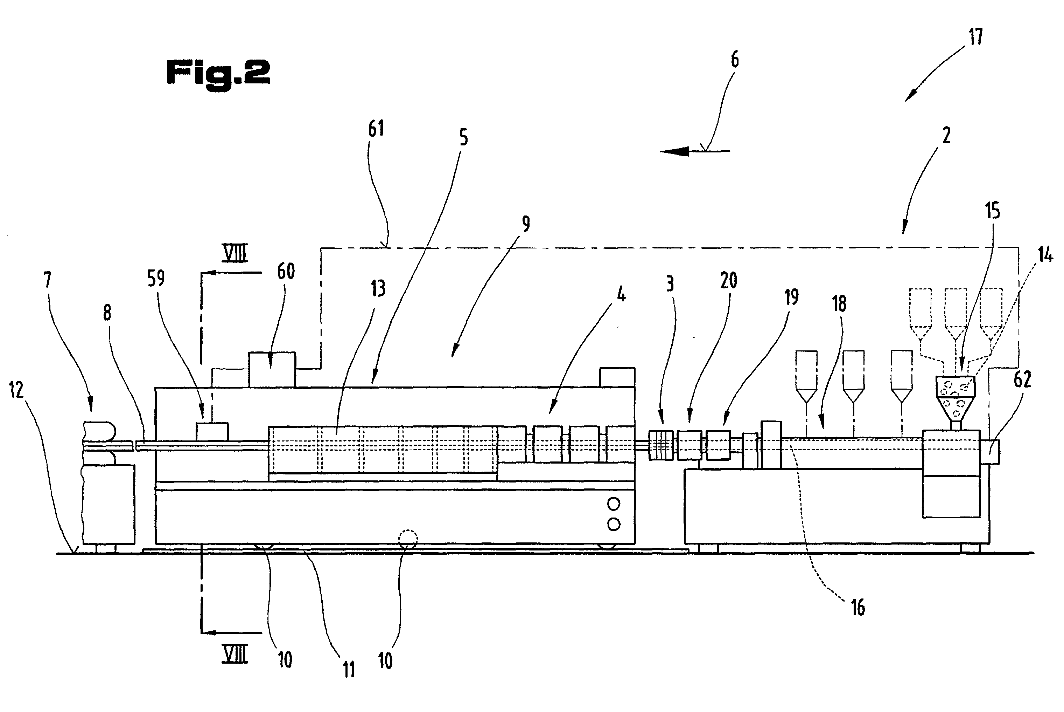

In der Fig. 2 ist nunmehr eine erfindungsgemäße Extrusionsanlage 17 in Seitenansicht und vereinfachter schematischer Darstellung gezeigt, wobei für gleiche Teile gleiche Bezugszeichen wie in der Fig. 1 verwendet werden.

Die hier gezeigte Extrusionsanlage 17 umfaßt eine Aufbereitungseinrichtung 2 eine Fördervorrichtung, bevorzugt eine nachfolgend noch im Detail beschriebene Homogenisiervorrichtung, eine dieser nachgeschaltete Formgebungsvorrichtung 3, wie z.B. ein Extrusionswerkzeug, sowie eine Kalibriervorrichtung 4 und ggf. eine Kühlvorrichtung 5. Dieser Kühlvorrichtung 5 ist in Extrusionsrichtung 6 ein schematisch und vereinfacht dargestellter Raupenabzug 7 nachgeordnet, mit welchem der Gegenstand 8, beispielsweise aus Kunststoff für den Fensterbau ausgehend von der Formgebungsvorrichtung 3 bzw. dem Extrusionswerkzeug durch die Kalibriervorrichtung 4 sowie Kühlvorrichtung 5 abgezogen werden kann und mittels nicht näher dargestellter Ein- bzw. Vorrichtungen entsprechend abgelängt werden kann.

Die Kalibriervorrichtung 4 sowie Kühlvorrichtung 5 der Extrusionsanlage 17 sind auf einem vereinfacht dargestellten Kalibriertisch 9 angeordnet bzw. auf diesem gehaltert, wobei sich der Kalibriertisch über vereinfacht dargestellte Laufrollen 10 und diesen zugeordneten Fahrschienen 11 auf einer schematisch angedeuteten Aufstandsfläche 12 abstützt bzw. auflagert.

Um unnötige Wiederholungen zu vermeiden, wird für die Ausbildung der Kalibriervorrichtung 4 bzw. die diese bildenden Kalibrierwerkzeuge sowie der Kühlvorrichtung 5 mit der Kühlkammer 13 auf die Beschreibung in der Fig. 1 hingewiesen bzw. bezug genommen, wobei die Ausbildung und Anordnung der zuvorgenannten Vorrichtungen nicht den Gegenstand der Erfindung betreffen.

Die Aufbereitungseinrichtung 2 ist hier durch einen gleichlaufenden, insbesondere Doppelschneckenextruder 18 mit zwei oder einen Mehrfachschneckenextruder mit mehreren Förderschnecken 16 gebildet, der das Rohmaterial zur Bildung der Schmelze aus dem Kunststoff 14 aufbereitet bzw. plastifiziert. Der Kunststoff 14 ist im Aufnahmebehälter 15 bevorratet. Dabei erfolgt die Aufbereitung des Rohmaterials für die Schmelze rohstoffspezifisch und wird unabhängig von der Ausstoßleistung durchgeführt. Diese rohstoffspezifische Aufbereitung des Rohmaterials ist je nach verwendeter Rohmaterialmischung und den hinzugesetzten Additiven, insbesondere für die Herstellung von Hohlprofilen aus PVC für den Fensterbau abhängig. Dabei sind PVC-Mischungen mit den unterschiedlichsten Zuschlagstoffen bzw. Additiven je nach Anwendungsfall und Einsatzzweck möglich, wobei die Additive in Prozeßadditive und Funktionsadditive unterteilt werden können und sich dabei die Aufbereitung des zumeist pulverförmigen Rohstoffes von den zugesetzten Additiven unterscheiden kann. Weiters können dem Rohstoffgemisch noch weitere Mischungsbestandteile, wie beispielsweise Gleitmittel, Stabilisatoren, Füllstoffe usw. zugesetzt sein. Den Prozeßadditiven sind beispielsweise PVC-Stabilistoren, Antioxidantien, Gleitmittel, Formtrennmittel zuzuordnen. Zu den Funktionsadditiven zählen beispielsweise Antioxidantien, Lichtschutzmittel, Metalldesaktivatoren, Flammschutzmittel, Farbmittel, optische Aufheller, Weichmacher, Schlagzähverbesserer, Füll- und Verstärkungsstoffe, Treibmittel, Nukleierungsmittel, Antistatika, Biostabilisatoren usw. Diese zuvor genannten Additive beeinflussen - je nach Zusatz sowie Mengenverhältnis - zusätzlich noch den Aufbereitungsvorgang vom Rohmaterial bis hin zur plastifizierten Schmelze.

Weiters unterscheidet man noch, wie bereits zuvor erwähnt, zusätzlich beim Werkstoff PVC zwischen einem Hart- und einem Weich-PVC (PVC-U, PVC-P), wobei bevorzugt wirtschaftliche Ausstoßleistungen bei Werkstoffen aus Hart-PVC mit branchenüblichen Profilmischungen zur Fensterprofilherstellung in einem K-Wert-Bereich zwischen 65 und 70, bevorzugt 68, erzielt werden können, wobei der K-Wert eine Kennzahl für das Molekulargewicht des Kunststoffes darstellt.

An derartige PVC-Mischungen zur Herstellung des Gegenstandes 8, insbesondere für Hohlprofile im Fensterbau, werden hohe Anforderungen an eine problemlose Verarbeitung, hohe Kerbschlagzähigkeit im gesamten Temperaturbereich, gute Tieftemperatureigenschaften, hohe Wetter-, Alterungs-, UV-, Witterungsbeständigkeit, gute Lichtechtheit und Oberflächengüte sowie an die Kostengünstigkeit gestellt. Um vorbestimmbare Produkteigenschaften des Gegenstandes im geformten sowie ausgehärteten Zustand zu erreichen, ist es notwendig, dem Rohmaterial zur Bildung der Schmelze im Zuge des Aufbereitungsvorganges einerseits eine gewisse Wärmemenge zuzuführen und andererseits das erwärmte Rohmaterial bzw. Rohmaterialien so lange zu kneten bzw. zu scheren, bis dieses den Zustand einer plastifizierten Schmelze aufweist bzw. in diesen übergeht.

Die zuvor genannten vorbestimmbaren Produkteigenschaften des Gegenstandes 8 können je nach Einsatz- bzw. Verwendungszweck zueinander unterschiedlichst sein und in Form von geforderten mechanischen Festigkeitskennwerten, der Oberflächengüte, dem Glanzgrad sowie der Beständigkeit gegenüber Witterung, UV-Strahlenbelastung, Alterung sowie Wetter darstellen. Aufgrund wirtschaftlicher Erwägungen sind hier ebenfalls Einsparungen wünschenswert, wobei es dabei möglich ist, verschiedenste Füllstoffe bzw. Zuschlagsstoffe dem Rohstoffgemisch zuzusetzen. Dabei dürfen die Verarbeitbarkeit sowie die vorbestimmbaren Produkteigenschaften nicht negativ beeinflußt werden.

Eine unter anderem verwendete Kennzahl zur Erreichung der im geformten sowie ausgehärteten Zustand vorbestimmbaren Produkteigenschaften ist der Geliergrad bzw. MFI/MVI der plastifizierten Schmelze, welcher durch die während der Aufbereitung des Rohmaterials in diese eingebrachte, spezifische Energie eingestellt werden kann. Der Geliergrad steht in direktem Zusammenhang mit einer verbreiteten Kenngröße zur Charakterisierung des Fließverhaltens von Kunststoffschmelzen. Diese Kenngröße wird als Schmelzindex MFI (Melt flow index) bezeichnet und ist eine typische Maßzahl für das Fließverhalten von Kunststoffschmelzen. Der MFI ist in diversen Normen, sprich DIN 53735, ISO 1133, ASTM D-1238 festgelegt und bildet so eine vorbestimmbare Kenngröße für das Fließverhalten von Kunststoffschmelzen. Der Schmelzindex dient zur schnellen und einfachen Charakterisierung des Fließverhaltens von Kunststoffschmelzen mit einem einzigen Zahlenwert. Als modifizierter Schmelzindex wird in der Fachwelt immer mehr auch der Volumenfließindex MVI benutzt. Dieser vorbestimmbare Geliergrad bzw. MFI/MVI ist durch unterschiedliche Stellgrößen durch die Aufbereitungseinrichtung 2 in Form des Doppelschneckenextruders 18 mit zueinander einen gleichen Drehsinn aufweisenden Schnecken beeinflußbar. Dazu zählt die während der Aufbereitung eingebrachte Knet- bzw. Scherarbeit und/oder die zugeführte Wärmemenge und/oder der Füllgrad des zur Verfügung stehenden Schneckenvolumens und/oder die Schneckengeometrie bzw. die Verweilzeit der Schmelze während deren Aufbereitung in der Aufbereitungseinrichtung 2 bei konstantem Volumenstrom einer Fördervorrichtung 19. Die in die Schmelze eingebrachte Knet- bzw. Scherarbeit kann verschiedenst beeinflußt werden, wobei dabei die Schneckendrehzahl und/oder das über die Schnecken der Aufbereitungseinrichtung 2 eingebrachte Drehmoment bzw. die Antriebsleistung ausschlaggebend sind.

Als besondere Werkstoffeigenheit im Zuge der Aufbereitung des Rohmaterials bzw. Rohmaterialien zur Bildung der PVC-Schmelze benötigt das Rohmaterial bzw. der Rohstoff zusätzlich zur Wärmeeinbringung über eine gewisse Zeitdauer eine gewisse Knet- bzw. Scherarbeit ebenfalls über eine gewisse Zeitdauer, um einerseits plastifiziert zu werden und andererseits einen ausreichenden Gelierungsgrad zur Erzielung vorbestimmbarer Produkteigenschaften des Gegenstandes im geformten sowie ausgehärteten Zustand zu gewährleisten. Aufgrund des offenen Systems gleichlaufender Doppelschneckenextruder 18 sind die vorgenannten Einflußgrößen zur Festlegung des Geliergrades bzw. MFI/MVI einfach einzuhalten. Derartige Extrudertypen bauen relativ geringe Förderdrücke auf. Deshalb ist im Betrieb der Aufbereitungseinrichtung 2 unmittelbar eine Fördervorrichtung 19 nachgeordnet. Diese Fördervorrichtung 19 bestimmt den Volumenstrom und ist für die Überwindung des Strömungswiderstandes bzw. des Gegendruckes der Formgebungsvorrichtung 3 zuständig. Diese Fördervorrichtung 19 ist im vorliegenden Ausführungsbeispiel durch eine Zahnradpumpe gebildet, welche sich dadurch auszeichnet, daß das Fördervolumen und/oder der Förderdruck während dem Betrieb in Extrusionsrichtung 6 hin zur Formgebungsvorrichtung 3 konstant gehalten werden kann. Dadurch ist es möglich, die in der Aufbereitungseinrichtung 2 aufbereitete und gelierte Schmelze in einem gleichmäßigen und vorbestimmbaren Volumenstrom an die Formgebungsvorrichtung 3 unabhängig vom Aufbereitungsvorgang im Doppelschneckenextruder 18 weiterzuleiten bzw. weiter zu fördern.

Als vorteilhaft hat es sich erwiesen, wenn zusätzlich zwischen der Aufbereitungseinrichtung 2 bzw. der Fördervorrichtung 19 und der Formgebungsvorrichtung 3 eine eigene Homogenisiervorrichtung 20 angeordnet ist, welche gemäß der WO 97/24214 A1 der gleichen Anmelderin ausgebildet sein kann. Um unnötige Wiederholungen zur Ausbildung, Wirkungsweise und Anordnung dieser Homogenisiervorrichtung 20 zu vermeiden, wird auf die Ausbildung der Vorrichtung sowie auf die Durchführung des Verfahrens gemäß der WO 97/24214 A1 bezug genommen und diese Offenbarung in die vorliegende Anmeldung übernommen. Dies betrifft vor allem die Anordnung der Umlenkelemente an den Formflächen, die Ausbildung und die Form der Umlenkelemente, sowie die den jeweiligen Umlenkelementen zugeordneten Vertiefungen, die zwischen den Vertiefungen angeordneten Durchbrüche sowie Verbindungskanäle, die Ausbildung der Durchströmkanäle, die Anordnung und Ausbildung der eigenen Zwischenplatte zwischen dem Formdeckel und dem Formgrundteil. Weiters trifft dies auch auf die während dem Durchtritt durch den bzw. die Durchströmkanäle zusammenhängende Schichte bzw. Schichten und deren zueinander unterschiedliche räumliche Verformung innerhalb der Homogenisiervorrichtung 20 zu.

Ein weiterer Vorteil der Fördervorrichtung 19 nachgeordneten Homogenisiervorrichtung 20 läßt sich dadurch erzielen, daß die durch die als Zahnradpumpe ausgebildete Fördervorrichtung 19 geförderte Schmelze Abzeichnungen der Zahnräder der Zahnradpumpe aufweisen kann und durch die Homogenisiereinrichtung 20 eine Glättung derartiger Abzeichnungen erzielt wird. Durch diese vorteilhafte Ausbildung wird eine höhere Profilqualität im bezug auf Oberfläche und Formstabilität nach erfolgter Abkühlung des Gegenstandes 8 erzielt.

Wie bereits zuvor beschrieben, ist es ein Spezifikum des Werkstoffes PVC, daß dieser zur zugeführten Wärme eine gewisse, in den Rohstoff eingebrachte Knet- bzw. Scherarbeit benötigt, um vollständig aufbereitet zu werden um damit einen vorbestimmbaren Geliergrad bzw. MFI/MVI zu erzielen. Dieser Geliergrad kann beispielsweise durch Kneten erhöht werden, wobei Geliergrade zwischen 50 % und 95 % möglich und erzielbar sind. Je nach vorbestimmbarer Zeitdauer und/oder Intensität der Knetung sind aber auch Geliergrade zwischen 70 % und 90 %, bzw. 80 % und 90 %, zum Erreichen vorbestimmbarer Produkteigenschaften des Gegenstandes 8 im geformten sowie ausgehärteten Zustand möglich.

Die Aufbereitung des Rohmaterials zur Bildung der Schmelze kann derart erfolgen, daß das Rohmaterial in der Aufbereitungseinrichtung 2 zumeist zuerst vorgewärmt und daran anschließend geknetet bzw. geschert wird. Unabhängig davon ist es aber auch möglich, eine zeitliche und/oder räumliche Überlappung der Wärmeeinbringung und der Knetung bzw. Scherung zur Bildung der Schmelze einzusetzen, wobei das Rohmaterial oder die Rohmaterialien zumindest teilweise erwärmt und zumindest teilweise geknetet wird. Selbstverständlich ist es aber auch möglich, das Rohmaterial oder die Rohmaterialien zur Bildung der Schmelze gleichzeitig zu erwärmen und zu kneten. Wesentlich ist noch, daß zur Aufbereitung des Rohmaterials oder der Rohmaterialien diesem eine vorbestimmbare Wärmemenge über eine vorbestimmbare Zeitdauer zugeführt wird, und zur Bildung der Schmelze das Rohmaterial oder die Rohmaterialien über eine vorbestimmbare Zeitdauer geknetet werden, wodurch der vorbestimmbare Geliergrad bzw. MFI/MVI der plastifizierten Schmelze eingestellt wird, ohne den Volumenstrom der Gesamtanlage zu beeinflussen. Ein wesentliches Kriterium für den Beginn der Gelierung während der Aufbereitung der Schmelze stellt auch der Zeitpunkt der vorhergehenden Wärmeeinbringung dar, wodurch die Dauer der Einbringung der Knet- bzw. Scherarbeit und damit die Verweilzeit festlegbar sind. Der Geliergrad, bzw. das Ausmaß der Gelierung, kann weiters auch noch durch die während der Aufbereitung in das Rohmaterial eingebrachte Wärmemenge festgelegt werden, um somit wiederum die vorbestimmbaren Produkteigenschaften des Gegenstandes 8 festzulegen. Weiters kann aber auch die über eine vorbestimmbare Zeitdauer eingebrachte Wärmemenge der vorhergehenden Wärmeeinbringung zur Aufbereitung der Schmelze den Beginn der Gelierung festlegen, wodurch damit indirekt die Verweildauer und somit der Geliergrad bzw. MFI/MVI einstellbar bzw. festlegbar sind.

Betrachtet man nunmehr einerseits die Mengenbilanz des in die Aufbereitungseinrichtung 2 eingebrachten Rohmaterials zur Bildung des Kunststoffes 14 durch diverse und bekannte Dosiervorrichtungen und andererseits den aus der Aufbereitungseinrichtung 2 und von der Fördervorrichtung 19 abgegebenen Volumenstrom der aufbereiteten Schmelze, kann durch Erhöhung des zugeführten Volumens des Rohmaterials über eine vorbestimmbare Zeiteinheit bei Entnahme mit einem gleichbleibenden Volumenstrom an aufbereiteter Schmelze die Verweilzeit des Rohmaterials bzw. der Schmelze in der Aufbereitungseinrichtung 2 vergrößert werden. Zur Erhöhung bzw. Vergrößerung der Verweilzeit des Rohmaterials in der Aufbereitungseinrichtung 2 ist es aber auch möglich, die Menge an zu erwärmendem und zu knetendem Kunststoff innerhalb der Aufbereitungseinrichtung 2 bei kontinuierlichem Volumenstrom an zugeführtem Rohmaterial und entnommener Schmelze zu erhöhen. Soll hingegen die Verweilzeit innerhalb der Aufbereitungseinrichtung 2 verringert werden, ist die Menge an zu erwärmendem und zu knetendem Kunststoff bei kontinuierlichem Volumenstrom an zugeführtem Rohmaterial und entnommener Schmelze zu verringern. Gleiches wird aber auch erreicht, wenn das zugeführte Volumen des Rohmaterials über eine vorbestimmbare Zeiteinheit bei gleichzeitiger Entnahme der Schmelze mit einem gleichbleibendem Volumenstrom verringert wird.

Weiters läßt sich die Verweilzeit durch die verschiedenen Einstellungen von einzelnen Aufbereitungsparametern voreinstellen. Hierzu ist es möglich, daß durch Erhöhung des zugeführten Volumens des Rohmaterials oder der Rohmaterialien über eine vorbestimmbare Zeiteinheit bei Entnahme der Schmelze mit einem gleichbleibenden Volumenstrom die Verweilzeit vergrößert wird. Zusätzlich kann bei gleichbleibendem Volumenstrom des Rohmaterials oder der Rohmaterialien über eine vorbestimmbare Zeiteinheit bei Entnahme der Schmelze mit einem verringerten Volumenstrom die Verweilzeit ebenfalls vergrößert werden. Andererseits wird durch Verringerung des zugeführten Volumens des Rohmaterials oder der Rohmaterialien über eine vorbestimmbare Zeiteinheit bei Entnahme der Schmelze mit einem gleichbleibenden Volumenstrom die Verweilzeit verringert. Weiters kann bei gleichbleibendem Volumenstrom des Rohmaterials oder der Rohmaterialien bei Entnahme der Schmelze über eine vorbestimmbare Zeiteinheit mit einem erhöhten Volumenstrom die Verweilzeit verringert werden.

Ein gleichmäßiger Füllgrad bzw. eine in etwa gleichbleibende Verweilzeit des Rohmaterials bzw. der Schmelze innerhalb der Aufbereitungseinrichtung 2 kann auch dadurch erreicht werden, wenn der Volumenstrom der Schmelze im unmittelbaren Anschluß an den Austritt aus der Fördervorrichtung 19 gleich dem Volumenstrom des Rohmaterials vor dessen Aufbereitung gehalten wird. Ein wesentliches Kriterium zur Erzielung eines vorbestimmbaren Geliergrades bzw. MFI/MVI stellt auch der Füllgrad der Aufbereitungseinrichtung 2 dar, welcher aufgrund der gewählten Anlagenkonfiguration unabhängig vom Volumenstrom der von der Fördervorrichtung 19 abgegebenen Schmelze ebenfalls vorbestimmbar festgelegt werden kann und beispielsweise kurzfristig durch Erhöhung und/oder Reduzierung des zugeführten Rohstoffes bzw. Rohmaterials zur Bildung der Schmelze einstellbar ist. Weiters hat es sich aber auch als vorteilhaft gezeigt, wenn dem Rohmaterial während der Aufbereitung bzw. Plastifizierung innerhalb der Aufbereitungseinrichtung 2 über den Längsverlauf des Doppelschnittenextruders 18 weitere Additive und/oder Zuschlagstoffe zugesetzt werden können, da somit das Mischungsverhältnis der aufbereiteten Schmelze, gewisse Prozeßparameter, sowie Werkstoffkennwerte des fertigen und ausgehärteten Gegenstandes 8 zusätzlich beeinflußt werden können.

Wie bereits zuvor beschrieben, ist die Aufbereitungseinrichtung 2 gegebenenfalls unter Zwischenschaltung der Homogenisiervorrichtung 20 eine eigene Fördervorrichtung 19 nachgeordnet, mit welcher das als Schmelze aufbereitete Rohmaterial unmittelbar an den Aufbereitungsvorgang anschließend unter Einhaltung eines gleichmäßigen und vorbestimmbaren Volumenstroms in Extrusionsrichtung 6 weitergefördert und so der Formgebungsvorrichtung 3 bzw. der Extrusionsdüse ein Schmelzestrom zugeführt wird, welcher in seinem Fördervolumen und/oder Förderdruck konstant ist. Innerhalb der Homogenisiervorrichtung 20 erfolgt zusätzlich zur vorbestimmbaren Aufbereitung bzw. Gelierung des Rohmaterials hin zur Schmelze eine Durchmischung und Homogenisierung, welche noch zusätzlich zur Erhöhung und Verbesserung der Materialkennwerte des fertig geformten und ausgehärteten Gegenstandes 8 beiträgt. Dadurch wird auch noch über den Querschnitt des Gegenstandes 8 gesehen eine homogenere Materialverteilung und Ausbildung erzielt,

Ein wesentliches Kriterium bei der Profilherstellung, insbesondere für den Fensterbau, stellt auch der Warmlagerungstest dar, bei welchem auf einem zu prüfenden Profil vor Beginn des Tests eine festgelegte Meßstrecke von 200 mm aufgetragen wird, daran anschließend das Profil über eine Zeitdauer von einer Stunde bei 100 °C gehalten wird und daran anschließend die Abkühlung auf Raumtemperatur erfolgt. Nach erfolgter Abkühlung darf die vorher aufgetragene Meßstrecke um maximal 2 % geschrumpft sein. Dieser geringe Schrumpfungswert ist bei bisher bekannten Extrusionsanlagen auf Grund des gewählten Verfahrensablaufes und der gewählten Maschinenkonfiguration bei den hohen Abzugskräften in Verbindung mit dem nachfolgenden Kalibrier- und Abkühlvorgang nur in gewissen Grenzen einzuhalten. Dabei spielt aber auch die gewählte Rohmaterialmischung, die Materialaufbereitung, die Düsengeometrie sowie der Memory-Effekt des Materials während der Aufbereitungsphase desselben innerhalb der Aufbereitungseinrichtung 2 bis hin zum Düsenaustritt eine wesentliche Rolle.

Weiters ist es möglich, wie in der Fig. 2 schematisch durch strichlierte Linien dargestellt, im Bereich des Aufnahmebehälters 15 der Extrusionsanlage 1 Vorratsbehälter für Zuschlagstoffe bzw. Additive zur Erstellung des Rohmaterials bzw. der Rohmaterialien zur Herstellung des Gegenstandes 8 anzuordnen. Durch eine derartige Anordnung ist es vorteilhafter Weise möglich, das Rohmaterial bzw. die Rohmaterialien zur Herstellung des Gegenstandes 8 unmittelbar vor der Aufbereitungseinrichtung 2 zu mischen, und so kann auf eine eigene Mischvorrichtung zur Herstellung des Rohmaterials bzw. der Rohmaterialien verzichtet werden, wodurch die Wirtschaftlichkeit der Herstellung des Gegenstandes 8 wesentlich erhöht werden kann. Selbstverständlich ist es auch möglich, Additive bzw. Zuschlagstoffe über derartige Vorratsbehälter während der Aufbereitung des Rohmaterials bzw. der Rohmaterialien in die Aulbereitungseinrichtung 2 zuzuführen, wie dies in strichpunktierten Linien schematisch angedeutet ist, wodurch eine exakte Abstimmung des Zeitpunktes der Zugabe der verschiedenen Zuschlagstoffe bzw. Additive bestimmt werden kann. Selbstverständlich ist auch eine Mischung des benötigten Rohmaterials bzw. der benötigten Rohmaterialien während des Einfüllvorganges in den Aufnahmebehälter 15 der Extrusionsanlage 1 möglich. Selbstverständlich ist es auch möglich, zur Herstellung des Rohmaterials oder der Rohmaterialien die Zugabe der Additive bzw. Zuschlagstoffe teilweise unmittelbar vor und teilweise während der Aufbereitung zuzumischen.

Ein weiterer Vorteil des erfindungsgemäßen Verfahrens liegt darin, daß alle anderen Extrudertypen welche nicht mit gegenlaufenden Extruderschnecken ausgestattet sind, zur Herstellung von Profilen für den Fensterbau verwendbar sind.

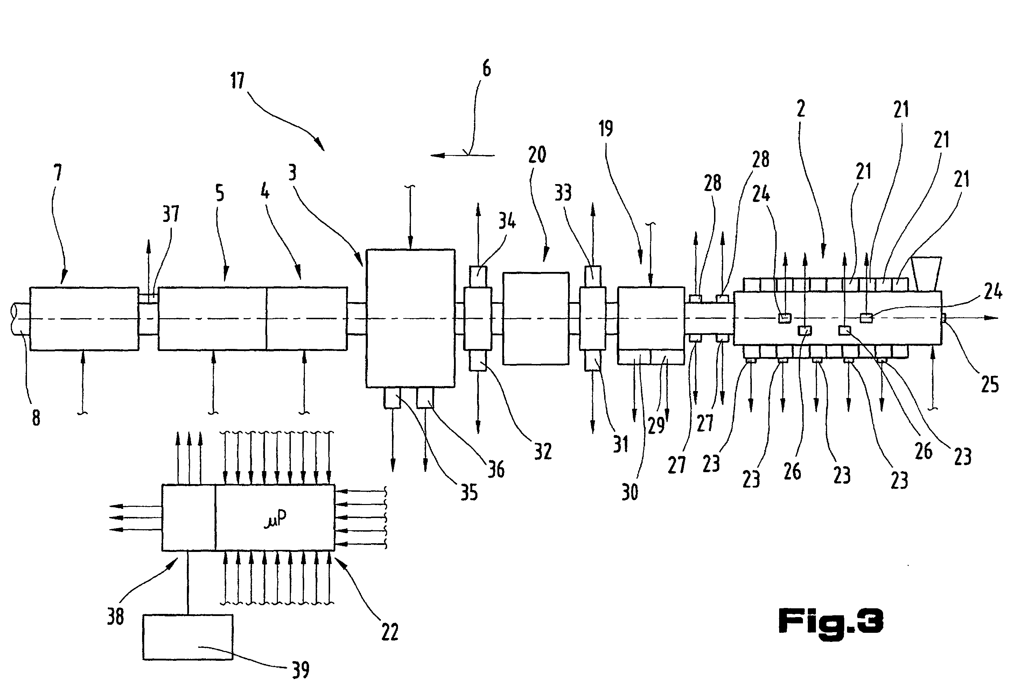

In der Fig. 3 ist schematisch vereinfacht eine Anlagenkonfiguration der Extrusionsanlage 17 gemäß der Fig. 2 schaubildlich und schematisch vereinfacht gezeigt, wobei für gleiche Teile gleiche Bezugszeichen wie in der Fig. 2 verwendet werden.

Diese Extrusionsanlage 17 umfaßt wiederum die Aufbereitungseinrichtung 2, die in Extrusionsrichtung 6 daran anschließende Fördervorrichtung 19, gegebenenfalls die zwischen der Fördervorrichtung 19 und der Formgebungsvorrichtung 3 angeordnete Homogenisiervorrichtung 20, die Kalibriervorrichtung 4, die Kühlvorrichtung 5 sowie den Raupenabzug 7, mit welchem der Gegenstand 8 ausgehend von der Formgebungsvorrichtung 3, wie beispielsweise der Extrusionsdüse, der Gegenstand 8 abgezogen werden kann und mit nicht näher dargestellten Ablängvorrichtungen auf die vorbestimmbare Länge abzulängen ist.

Der Aufbereitungseinrichtung 2 sind über deren Längsverlauf mehrere Temperierelemente 21 zugeordnet, welche dazu dienen, die vorbestimmbare Temperaturerhöhung, bzw. den Beginn der Wärmeeinbringung und die damit verbundene Einbringung einer gewissen Wärmemenge über eine vorbestimmbare Zeitdauer sowie gegebenenfalls eine Kühlung des durch die Aufbereitungseinrichtung 2 hindurchgeführten Rohmaterials während deren Aufbereitung hin zur Schmelze durchzuführen.

Weiters ist hier vereinfacht dargestellt, daß den einzelnen Anlageteilen der Extrusionsanlage 17 unterschiedlichste Sensoren bzw. Meßwertgeber zugeordnet sind, welche dazu dienen, Istwerte der einzelnen Verfahrensparameter zu ermitteln und an eine vereinfacht dargestellte Steuervorrichtung 22 mittels Leitungen, einem Leitungsnetz bzw. einem Bussystem weiter zu leiten. Der Einfachheit und der besseren Übersichtlichkeit halber wurden die einzelnen Verbindungsleitungen zwischen den einzelnen Sensoren und der Steuervorrichtung 22 nur bereichsweise gezeigt, wobei jeweils die Leitung ausgehend vom Sensor mit einem vom Sensor abgewendeten bzw. wegzeigenden Pfeil und im Bereich der Steuervorrichtung 22 mit einem hin zur Steuervorrichtung 22 weisenden Pfeil vereinfacht dargestellt wurde.

Wie bereits zuvor beschrieben, stellt der Geliergrad bzw. MFI/MVI und somit der Grad der Aufbereitung des Rohstoffes hin zur Schmelze einen wesentlichen Kennwert für die produktspezifischen Eigenschaften im geformten sowie ausgehärteten Zustand dar, wodurch im Bereich der Aufbereitungseinrichtung 2 der wesentlichste Teil der Rohstoffaufbereitung liegt. Um eine exakte Temperierung bzw. Vorwärmung sowie gegebenenfalls Kühlung des durch die Aufbereitungseinrichtung 2 hindurchtretenden Kunststoffmaterials zu erzielen, sind dieser die Temperierelemente 21 über deren Längsverlauf zugeordnet, wobei einzelne der Temperierelemente im Bereich der Heiz- und/oder Kühlzone der Aufbereitungseinrichtung 2 mehrere Sensoren 23 zugeordnet sind, mit welchen beispielsweise die Menge des durch die Temperierelemente 21 hindurchströmenden Temperiermediums festgestellt bzw. gemessen werden kann und dieser ermittelte Meßwert an die Steuervorrichtung 22 weitergeleitet wird. Zusätzlich sind über den Längsverlauf der Aufbereitungseinrichtung 2 dieser noch mehrere, im vorliegenden Ausführungsbeispiel zwei weitere Sensoren 24 zur Ermittlung der Temperatur des Kunststoffmaterials zugeordnet. Diese Sensoren 24 stehen wiederum über Leitungen mit der Steuervorrichtung 22 in Verbindung. Zur Ermittlung der Antriebsparameter der Aufbereitungseinrichtung 2 ist dieser zumindest ein weiterer Sensor 25 im Bereich des Antriebs zugeordnet, mit welchem das Antriebsdrehmoment und/oder die Schneckendrehzahlen ermittelt werden und diese Werte ebenfalls wiederum an die Steuervorrichtung 22 als Istwerte weitergeleitet werden. Zur Ermittlung des Füllgrades der Aufbereitungseinrichtung 2 mit Kunststoff können dieser wiederum mehrere weitere Sensoren 26 über deren Längsverlauf zugeordnet sein und beispielsweise als Infrarot-Temperaturfühler ausgebildet sein.

Im Übertrittsbereich der Kunststoffschmelze zwischen der Aufbereitungseinrichtung 2 und der Fördervorrichtung 19 können weitere Sensoren 27, 28 angeordnet sein, welche beispielsweise die Temperatur sowie den Druck der Kunststoffschmelze im Übertrittsbereich zur Charakterisierung des Aufbereitungsgrades der Kunststoffschmelze ermitteln und diese ermittelten Meßwerte ebenfalls an die Steuervorrichtung 22 weiterleiten.

Der Fördervorrichtung 19 sind zur Ermittlung der Drehzahl sowie des aufgebrachten Drehmomentes weitere Sensoren 29, 30 zugeordnet, welche die ermittelten Istwerte ebenfalls an die Steuervorrichtung 22 weiterleiten. Wie bereits zuvor beschrieben, ist es weiters möglich, zwischen der Fördervorrichtung 19 und der Formgebungsvorrichtung 3 die Homogenisiervorrichtung 20 anzuordnen, welche den aus der Fördervorrichtung 19 austretenden Schmelzestrom nach erfolgter Aufbereitung zusätzlich homogenisiert, wobei zur Ermittlung des Druckes und der Temperatur jeweils im Übertrittsbereich zwischen der Fördervorrichtung 19 und der Homogenisiervorrichtung 20 bzw. der Homogenisiervorrichtung 20 und der Formgebungsvorrichtung 3 Sensoren 31, 32 zur Ermittlung der Temperatur und weitere Sensoren 33, 34 zur Ermittlung des Druckes in den jeweiligen Übertrittsbereichen angeordnet sind, welche wiederum die ermittelten Istwerte an die Steuervorrichtung 22 weiterleiten. Weiters können der Formgebungsvorrichtung 3 ebenfalls Sensoren 35, 36 zur Ermittlung der Temperatur bzw. des Druckes zugeordnet sein, wobei diese ermittelten Istwerte ebenfalls an die Steuervorrichtung 22 weitergeleitet werden.

Ein weiterer Sensor 37 kann im Bereich des Raupenabzuges 7 angeordnet sein, welcher die Abzugsgeschwindigkeit des Gegenstandes 8 ermittelt und ebenfalls diesen ermittelten Istwert an die Steuervorrichtung 22 weiterleitet.

Auf Grund der Fülle dieser ermittelten Istwerte ist der Steuervorrichtung 22 eine Auswertevorrichtung 38 zugeordnet, welche auf Grund der ermittelten Istwerte der einzelnen Sensoren 23 bis 37 eine Vergleichsoperation mit den in einer Speichervorrichtung 39 gespeicherten und vorgebbaren Sollwerten durchführt und entsprechende Regel- bzw. Stellsignale an die den einzelnen Anlageteilen zugeordneten Aktoren weiterleitet und so ein Regelkreis stattfindet.

Diese Aktoren sind schematisch vereinfacht durch auf die einzelnen Anlagenteile gerichtete Pfeile dargestellt. Im Bereich der Aufbereitungseinrichtung 2 betrifft dies die Ansteuerung der Temperierelemente 21, die Zufuhr des Rohstoffes zur Aufbereitungseinrichtung 2 sowie die Steuerung des Antriebes im bezug auf Antriebsmoment sowie Schneckendrehzahl.

Der Fördervorrichtung 19 ist ebenfalls zumindest ein Aktor zugeordnet, welcher beispielsweise die Drehzahl und damit verbunden das Fördervolumen bzw. den Volumenstrom des Kunststoffes festlegt. Weiters ist es auch möglich, der Formgebungsvorrichtung 3 zumindest einen Aktor zuzuordnen, welcher ebenfalls die Temperierung desselben regelt, um so eine optimale Schmelzetemperatur im Bereich dieser zu gewährleisten. Selbstverständlich können auch der Kalibriervorrichtung 4, der Kühlvorrichtung 5 sowie dem Raupenabzug 7 weitere Aktoren zugeordnet sein, um auch in diesem Bereich einen optimalen Verfahrensablauf zur Herstellung des Gegenstandes 8 zu erzielen.

Auf Grund der Zuordnung der einzelnen Sensoren 23 bis 37 zu den einzelnen Anlageteilen der Extrusionsanlage 17 ist es möglich, ein Verfahren zum Regeln des Geliergrades bzw. MFI/MVI - wie dies im nachfolgenden noch näher erläutert werden wird - bzw. der zur Erzielung des Geliergrades bzw. MFI/MVI eingebrachten spezifischen Energie bei der Plastifizierung von Kunststoffen mit einer durch die Aufbereitungseinrichtung 2 gebildeten Kneteinrichtung festzulegen, mit welchem die Drehzahl der Knetwerkzeuge der Aufbereitungseinrichtung 2, das Drehmoment an der Antriebswelle der Aufbereitungseinrichtung 2 bzw. Kneteinrichtung, die aufgenommene Heizleistung im Bereich der Plastifizierung des Kunststoffes sowie den Füllgrad in Abhängigkeit vom gewünschten Geliergrad bzw. MFI/MVI vorzubestimmen sowie festzulegen und auf diesem Wert zu halten. Weiters können die für die unterschiedlichen Geliergrade bzw. MFI/MVI erforderlichen Werte für die Drehzahl der Knetwerkzeuge der Aufbereitungseinrichtung 2, das Drehmoment an der Antriebswelle der Aufbereitungseinrichtung 2 bzw. Kneteinrichtung, der Füllgrad der Aufbereitungseinrichtung 2 sowie die notwendige Wärmemenge und gegebenenfalls der Zeitpunkt der Wärmeeinbringung in der Speichervorrichtung 39 als vorgebbare Sollwerte hinterlegt sein und diese Werte je nach gewünschtem Geliergrad bzw. MFI/MVI in die Auswertevorrichtung 38 sowie gegebenenfalls Steuervorrichtung 22 eingelesen bzw. übernommen werden und die einzelnen Istwerte für die Drehzahl, das Drehmoment, den Füllgrad sowie die Wärmemenge mittels der einzelnen Sensoren ermittelt werden und an die Steuervorrichtung 22 weitergeleitet werden und mittels der Steuervorrichtung 22 und/oder der Auswertevorrichtung 38 die einzelnen Vorrichtungen der Kneteinrichtung angesteuert und derart verändert werden, daß eine Anpassung der ermittelten Istwerte an die vorgegebenen Sollwerte durchgeführt wird.

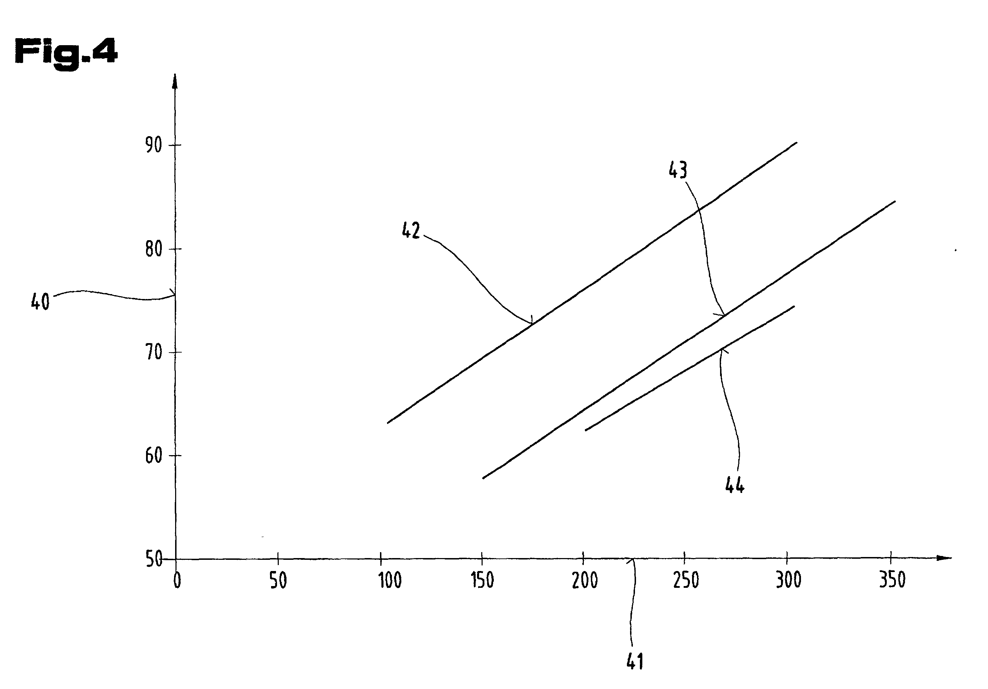

In den Fig. 4 bis 7 sind in unterschiedlichen Diagrammen für jeweils unterschiedliche Massendurchsätze des Kunststoffmaterials während der Aufbereitung durch die Aufbereitungseinrichtung 2 in Abhängigkeit von unterschiedlichen Anlageparametern dargestellt. Diese Darstellung zeigt lediglich prinzipielle Zusammenhänge, wobei die angegebenen Zahlenwerte materialabhängig und anlagenabhängig sind. Grundsätzlich sei festgehalten, daß der Geliergrad durch aus dem Stand der Technik bekannte Meßverfahren, wie z.

B. durch eine MFI-Messung oder durch eine DSC-Messung, bestimmt werden kann. Weiters gibt der Geliergrad jenen Anteil an gelierten Bestandteilen in der Schmelze an, welche sich in geliertem Zustand befinden, wobei der Anteil an überhaupt gelierfähigen Bestandteilen zumeist geringer 100 % der Gesamtmenge bzw. Volumen der Mischung ist. Von diesem Anteil gibt nun der Geliergrad Auskunft über jenen Prozentsatz, welcher geliert ist.

In der Fig. 4 ist auf einer Ordinate 40 der Geliergrad in Prozent und auf einer Abszisse 41 die Drehzahl der Schnecke bzw. des Knetwerkzeuges in U/min aufgetragen, wobei verschiedene Meßwerte für unterschiedliche Massendurchsätze durch die Aufbereitungseinrichtung 2 durch verschiedene Diagrammlinien 42 bis 44 den jeweiligen erreichbaren Geliergrad in Abhängigkeit von der Schneckendrehzahl zeigen. Als Massendurchsätze wurden bei der Diagrammlinie 42 15 kg/h, bei der Diagrammlinie 43 30 kg/h und bei der Diagrammlinie 44 45 kg/h durch die Aufbereitungseinrichtung 2 gewählt. Wird beispielsweise die Diagrammlinie 42 betrachtet, kann festgestellt werden, daß je höher die Schneckendrehzahl bzw. die Drehzahl der Knetwerkzeuge wird, auch eine Erhöhung des Geliergrades erfolgt. Durch die höhere gewählte Schneckendrehzahl erfolgt somit eine stärkere Durchknetung bzw. Scherung des Kunststoffmaterials, wodurch der Geliergrad ebenfalls erhöht wird.

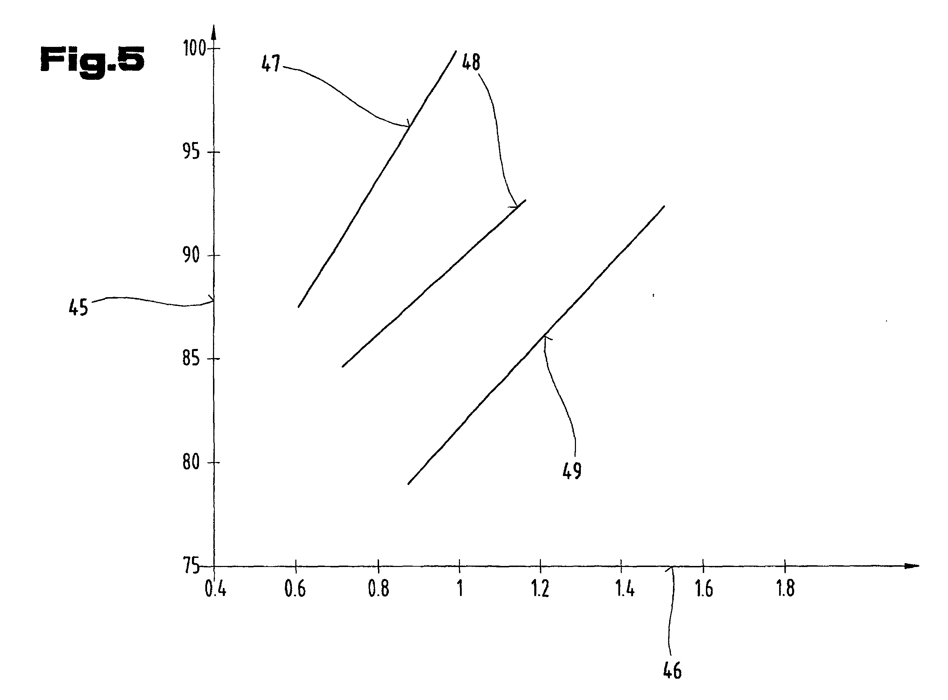

In der Fig. 5 ist der Geliergrad bzw. MFI/MVI in Abhängigkeit von der spezifischen Antriebsleistung der Aufbereitungseinrichtung 2 bei verschiedenen Massendurchsätzen gezeigt, wobei auf einer Ordinate 45 der Geliergrad in Prozent und auf einer Abszisse 46 die spezifische Antriebsleistung ($P_E/(m * \Delta h)$) aufgetragen ist. In drei verschiedenen Diagrammlinien 47 bis 49 sind wiederum unterschiedliche Massendurchsätze des Kunststoffmaterials durch die Aufbereitungseinrichtung 2 dargestellt, wobei beispielsweise die Diagrammlinie 47 einen Massendurchsatz von 45 kg/h, die Diagrammlinie 48 einen Massendurchsatz von 30 kg/h und die Diagrammlinie 49 einen Massendurchsatz von 17 kg/h zeigt. Dabei ist zu ersehen, daß bei einer Erhöhung der spezifischen Antriebsleistung jeweils eine Erhöhung des Geliergrades erreicht wird.

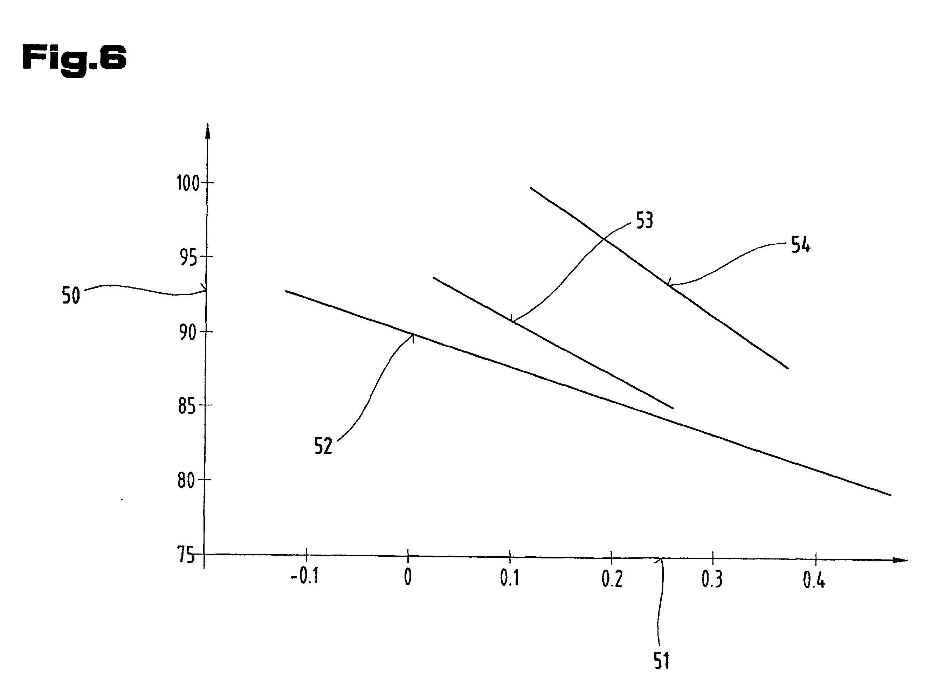

In der Fig. 6 ist nunmehr der Geliergrad in Abhängigkeit von der spezifischen Heizleistung der Aufbereitungseinrichtung 2 bei unterschiedlichen Massendurchsätzen durch die Aufbereitungseinrichtung 2 gezeigt, wobei wiederum auf einer Ordinate 50 der Geliergrad in Prozent und auf einer Abszisse 51 die spezifische Heizleistung der Aufbereitungseinrichtung 2 ($H_E / (m * \Delta h)$) aufgetragen ist. In eingetragenen Diagrammlinien 52 bis 54 sind die unterschiedlichen Massendurchsätze dargestellt, wobei die Diagrammlinie 52 einen Massendurchsatz von 17 kg/h, die Diagrammlinie 53 einen Massendurchsatz von 30 kg/h und die Diagrammlinie 54 einen Massendurchsatz von 45 kg/h zeigt. Aus diesem dargestellten Diagramm ist zu ersehen, daß bei einer Erhöhung der spezifischen Heizleistung eine Abnahme des Geliergrades erfolgt.

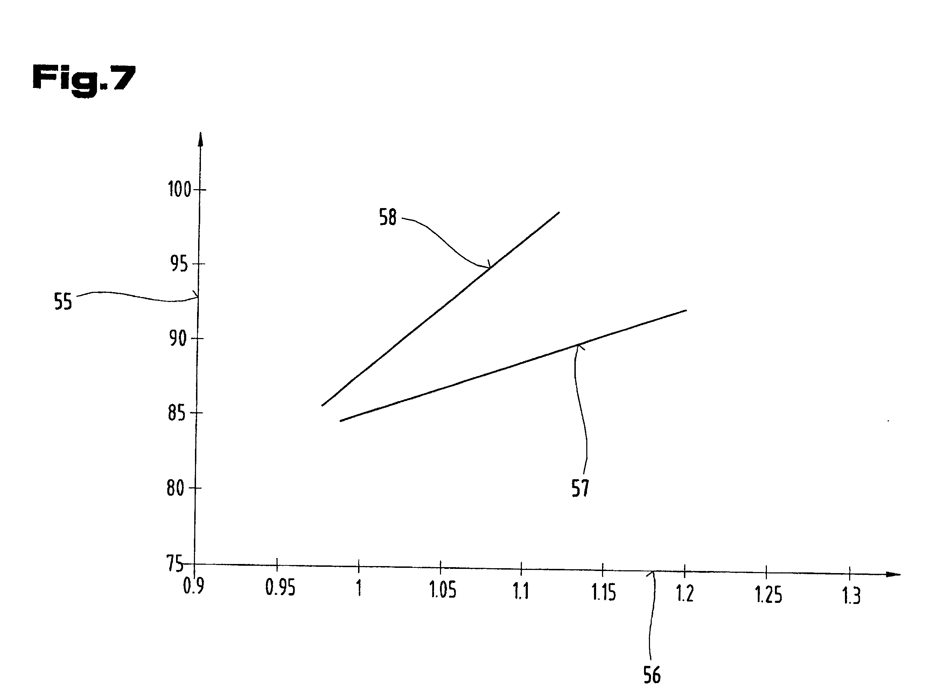

Schließlich ist in der Fig. 7 der Geliergrad in Abhängigkeit von der spezifischen Antriebsleistung sowie der spezifischen Heizleistung bei unterschiedlichen Massendurchsätzen gezeigt, wobei wiederum auf einer Ordinate 55 der Geliergrad in Prozent und auf einer Abszisse 56 die Summe der spezifischen Antriebsleistung sowie der spezifischen Heizleistung der Aufbereitungseinrichtung 2 aufgetragen sind. Die beiden eingetragenen Diagrammlinien 57, 58 stellen unterschiedliche Massendurchsätze dar, wobei die Diagrammlinie 57 einen Massendurchsatz von 30 kg/h und die Diagrammlinie 58 einen Massendurchsatz von 45 kg/h durch die Aufbereitungseinrichtung 2 darstellt. Die beiden Kennwerte für die spezifische Antriebsleistung sowie für die spezifische Heizleistung stellen Kennzahlen dar, welche als Prozeßführungsgrößen einen großen Einfluß auf den erzielbaren Geliergrad und damit verbunden auf die Qualität des hergestellten Gegenstandes 8 darstellen.

Die Kennzahl für die spezifische Antriebsleistung ermittelt sich aus

$$P_E / (m * \Delta h)$$

wobei

$P_E$    die Leistung der Aufbereitungseinrichtung,

m    Massestrom

$\Delta h$    die Enthalpieerhöhung darstellt.

Die Kennzahl für die spezifische Heizleistung ermittelt sich aus

$$H_E / (m * \Delta h)$$

wobei

$H_E$    die Heizleistung der Aufbereitungseinrichtung,

m    Massestrom

$\Delta h$    die Enthalpieerhöhung darstellt.

Diese Kennzahlen lassen sich bei konstantem Volumenstrom bzw. Massestrom der Fördervorrichtung 19 durch die Aufbereitungseinrichtung 2 beeinflussen.

Wie zuvor bereits aufgezeigt, kommt dem Geliergrad beim Verarbeiten von Kunststoffen, insbesondere PVC, eine hohe Bedeutung zu. Um diesen Geliergrad nunmehr feststellen zu können bzw. eine Extrusionsanlage 17, insbesondere eine Aufbereitungseinrichtung 2 oder eine Fördervorrichtung 19 steuern oder regeln zu können, muß der Geliergrad des Kunststoffes entweder in jenem Bereich der Aufbereitungseinrichtung 2 oder der Fördervorrichtung 19 oder durch Ermittlung von Meßwerten am Kunststoffprofil, die eine Kennzahl für den Geliergrad sind, ermittelt werden. Für die moderne zerstörungsfreie Werkstoffprüfung empfehlen sich hierbei vor allem elektrische Kennzahlen des fertiggestellten Gegenstandes 8, insbesondere des Kunststoffprofils. Als derartige elektrische Kennzahlen können entweder die Leitfähigkeit, der Widerstand oder andere physikalische Größen wie z.B. die Zeitkonstante, ein bestimmter Kondensatorstrom, die Dielektrizitätszahl oder sonstige physikalisch Größen, die einen Entlade- bzw. Ladevorgang eines Kondensators formelmäßig beschreiben, verwendet werden.

In Verbindung mit der in Fig. 2 beschriebenen Extrusionsanlage 17 ist nun eine Meßvorrichtung 59 zum Ermitteln, z.B. der Dielektrizitätszahl des aus der Kühlvorrichtung 5 austretenden formstabilen Gegenstandes 8, insbesondere Hohlprofils angeordnet. Diese Meßvorrichtung 59 kann dazu am Kalibriertisch 9 angeordnet sein und ist mit einer Steuervorrichtung 60 verbunden, die ihrerseits über eine Steuerleitung 61 mit einem Antriebsmotor 62 der Aufbereitungseinrichtung 2 zusammengeschaltet sein kann. Die Steuervorrichtung 60 kann aber auch eine zusätzliche Regelvorrichtung umfassen, bzw. durch diese gebildet sein. Selbstverständlich ist es auch möglich, mittels der Steuervorrichtung 60 nur die entsprechenden Daten des Geliergrades zu ermitteln, um darauf durch manuelle Nachjustierung oder Eingabe von entsprechenden Kennwerten in andere Steuervorrichtungen die Funktion der Aufbereitungseinrichtung 2 bzw. der Kneteinrichtung oder der Fördervorrichtung 19 so zu verändern, daß ein gewünschter Geliergrad im Bereich der Aufbereitungseinrichtung 2 erzielt bzw, eingehalten werden kann.

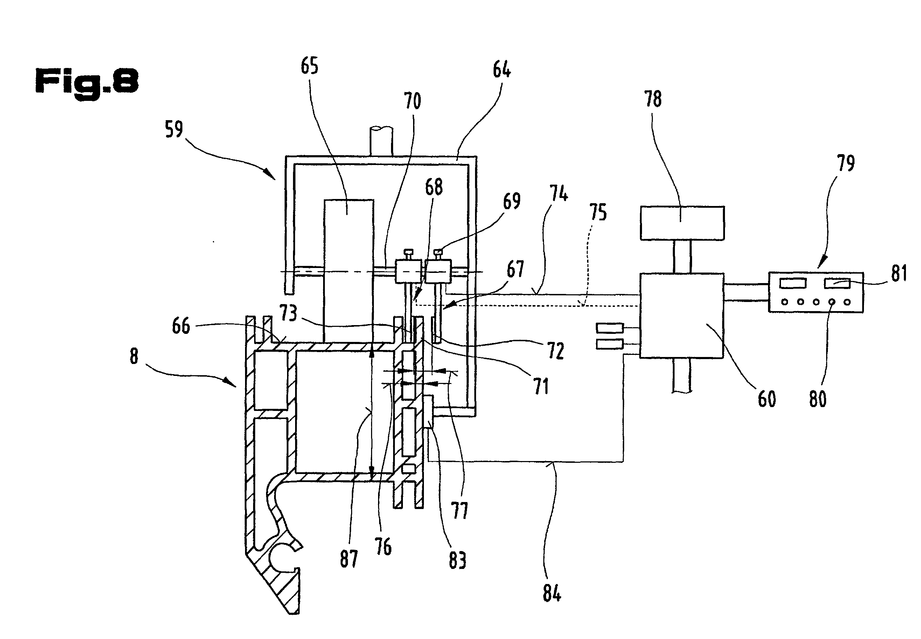

Die Anordnung und Ausbildung der Meßvorrichtung 59 ist in Fig. 8 näher dargestellt.

In Fig. 8 ist eine Stirnansicht des Gegenstandes 8, insbesondere des extrudierten Fensterprofiles, im Schnitt und in vergrößerter Darstellung gezeigt.

Die Meßvorrichtung 59 umfaßt beispielsweise einen Tragrahmen 64, der bevorzugt über eine Führungsrolle 65 auf einer Seitenfläche 66 des Gegenstandes 8 bzw. Fensterprofiles höhenmäßig exakt geführt sein kann. In dem Tragrahmen 64 sind zwei Meßfühler 67, 68 gezeigt, die beispielsweise über Arretiermittel 69 einstellbar und verstellbar auf einem Teil 70 des Tragrahmens 64 gelagert sind.

Die beiden Meßfühler 67, 68 sind beispielsweise beidseits eines Steges 71 des Gegenstandes 8 gegenüberliegend angeordnet. Auf den einander zugewandten Seiten der Meßfühler 67, 68 sind Kondensatorplatten 72, 73 angeordnet, die über Leitungen 74, 75 mit der Steuervorrichtung 60 verbunden sind. Durch diese Anordnung der Meßvorrichtung 59 wird erreicht, daß beim kontinuierlichen Abziehen des Gegenstandes 8 in Extrusionsrichtung sich der Steg 71 kontinuierlich zwischen den beiden Kondensatorplatten 72, 73 hindurchbewegt.

Nachdem der Kunststoff, aus dem der Gegenstand 8 hergestellt ist, ein Dielektrikum darstellt, kann nun bei Veränderungen dieses Dielektrikums, beispielsweise basierend auf Änderungen in einer Wandstärke 76 oder morphologischen Veränderungen im Kunststoff des Gegenstandes 8 eine Veränderung der Kapazität bewirkt und mit der Steuervorrichtung 60 festgestellt werden. Bleibt beispielsweise der Luftspalt zwischen den beiden in einer Distanz 77 voneinander angeordneten Kondensatorplatten 72, 73 gleich groß und ist auch die Wandstärke 76 über die Länge des Gegenstandes 8 konstant, so können durch die Veränderungen in der Kapazität morphologische Veränderungen festgestellt werden, wenn diese morphologischen Veränderungen, wie beispielsweise bei einigen Kunststoffen, vor allem PVC, die Dielektrizitätszahl des Materials verändern.

Dazu ist es vorteilhaft, wenn beispielsweise in einem Speicher 78 jene Kapazitäten für unterschiedliche Werkstoffe, aus denen der Gegenstand 8 hergestellt ist, und auch für die Wandstärken 76 im Bereich derer die Kapazität zwischen den Kondensatorplatten 72, 73 ermittelt wird, hinterlegt sind, wobei diese beispielsweise über eine Eingabeund/oder Anzeigevorrichtung 79 mittels Stellorganen 80 eingegeben und über Anzeigevorrichtungen 81 angezeigt werden können. Diese Anzeigevorrichtungen 81 und die Stellorgane 80 können auch multifunktional ausgebildet sein, sodaß sie beim Eingeben der im Speicher 78 zu hinterlegenden Fixwerte die eingegebenen Meßwerte anzeigen, während im Meßbetrieb bzw. bei der kontinuierlichen Produktion des Gegenstandes 8 mit diesen Anzeigevorrichtungen 81 dann der jeweils aktuelle Meßwert der Kapazität oder die Abweichungen des Ist-Wertes der Kapazität von den ermittelten oder in den Speichern 78 hinterlegten Planwerten angezeigt werden.

Vor allem bei PVC ist damit eine Veränderung der morphologischen Eigenschaften insbesondere deshalb möglich, da das PVC einen Dipolcharakter aufweist und je nach dem im Material des Gegenstandes 8 vorhandenen morphologischen Strukturen sich die Verteilung dieser Dipole verändert und damit sich die Dielektrizitätszahl verändert. Diese morphologischen Strukturen bzw. die Verteilung der Dipole ist aber nach den derzeitigen wissenschaftlichen Erkenntnissen in Abhängigkeit vom Geliergrad darzustellen und ist es daher möglich, durch die Messung der Dielektrizitätszahl online ihn in der Fertigungsanlage zu messen, sodaß nur mit geringer Zeitverzögerung beispielsweise zwischen den die Kunststoffe für den Gegenstand 8 gelierenden Vorrichtungen, wie der Aufbereitungseinrichtung 2 und dem Bereich zwischen der Kühlvorrichtung 5 und der Abzugvorrichtung, in welche das Profil formstabil ist und eine über eine längere Betriebsdauer gleichbleibende Temperatur aufweist, zu messen. Dadurch, daß der Gegenstand 8 eine annähernd gleiche Temperatur im Bereich der Meßvorrichtung 59 aufweist, wirkt sich auch der Temperatureinfluß auf das Meßergebnis nicht nachteilig aus.

Da außerdem nach dem Kalibrieren und Kühlen des Profils dieses eine üblicherweise nahezu unveränderte Wandstärke aufweist, ist es in den meisten Fällen nicht notwendig, die Wandstärke 76 des Profils im Bereich der Meßvorrichtung 59 gleichzeitig zu ermitteln, sondern kann die definierte Wandstärke 76 im Speicher 78 hinterlegt werden.

Bevorzugt hat sich nunmehr herausgestellt, daß die Dielektrizitätszahl bei PVC ein Minimum an jener Stelle anzeigt, an welcher die morphologischen und mechanischen Eigenschaften des Materials des Gegenstandes 8 in einem optimalen Bereich des Geliergrades von 80 % bis 90 % plastifiziert bzw. geschert worden sind.

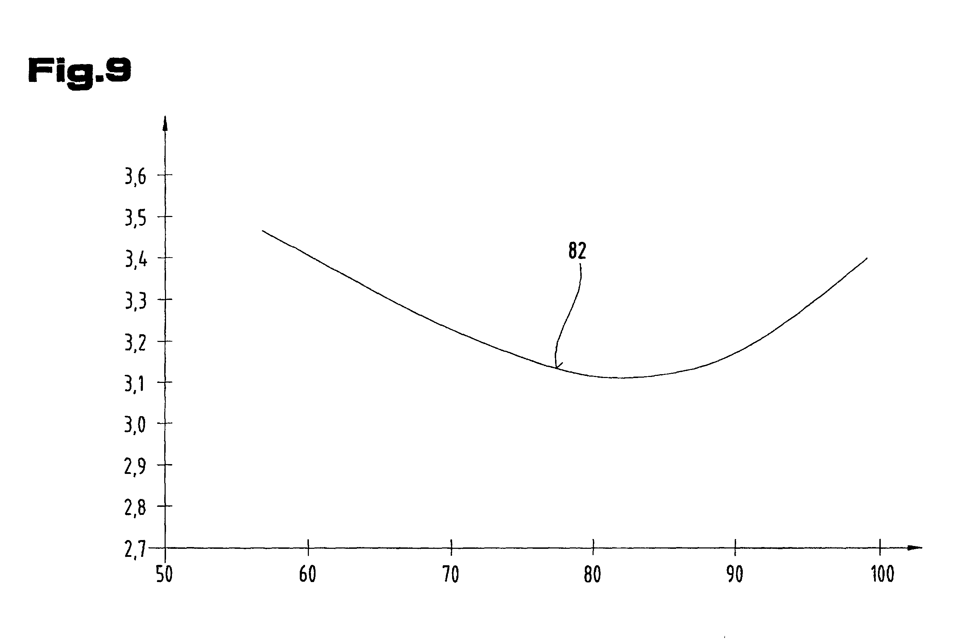

In Fig. 9 ist der Zusammenhang zwischen der relativen Dielektrizitätszahl unter in Abhängigkeit vom Geliergrad in Prozent dargestellt.

Dazu ist auf der Abszisse der Geliergrad in Prozent und auf der Ordinate die relative Dielektrizitätszahl gezeigt.

Wie eine Diagrammlinie 82 zeigt, ist die relative Dielektrizitätszahl im Bereich eines Geliergrades von 80 % bis 90 % am geringsten. Bei diesem Geliergrad von 80 % bis 90 % werden die günstigsten physikalischen Eigenschaften des Materials im nach der Verarbeitung ausgehärteten Zustand erreicht und können die günstigsten vorbestimmbaren Produkteigenschaften des Gegenstandes 8 in geformten sowie ausgehärteten Zustand des Rohmaterials erreicht werden.

Grundsätzlich ist hierzu noch anzumerken, daß die Ermittlung des Geliergrades auf entsprechender Darstellung im Diagramm in Fig. 9 unter Heranziehung der DSC-Messung (Differential Scanning Calority) erfolgt und ausgehend von diesen Festlegungen entweder durch Versuchsreihen oder entsprechende danach erstellte Berechnungsmodelle die Kapazität C bei einer vorbestimmbaren Anordnung der Meßvorrichtung 59 errechnet bzw. festgelegt werden kann, um das Verhältnis zwischen der Kapazität C bzw. den Veränderungen der Kapazität C der Meßvorrichtung 59 bei der Online-Kontrolle eines Gegenstandes 8 einen direkten Rückschluß auf den Geliergrad ziehen zu können.

Nachdem die Kapazität C durch das Dielektrikum, welches sich zwischen den beiden in der Distanz 77 voneinander befindlichen Kondensatorplatten 72, 73 abhängig ist, können natürlich auch Veränderungen durch die Breite des Luftspaltes, der zwischen den beiden Kondensatorplatten 72, 73 und dem Steg 71 verbleibt, das Meßergebnis ebenso verändern.

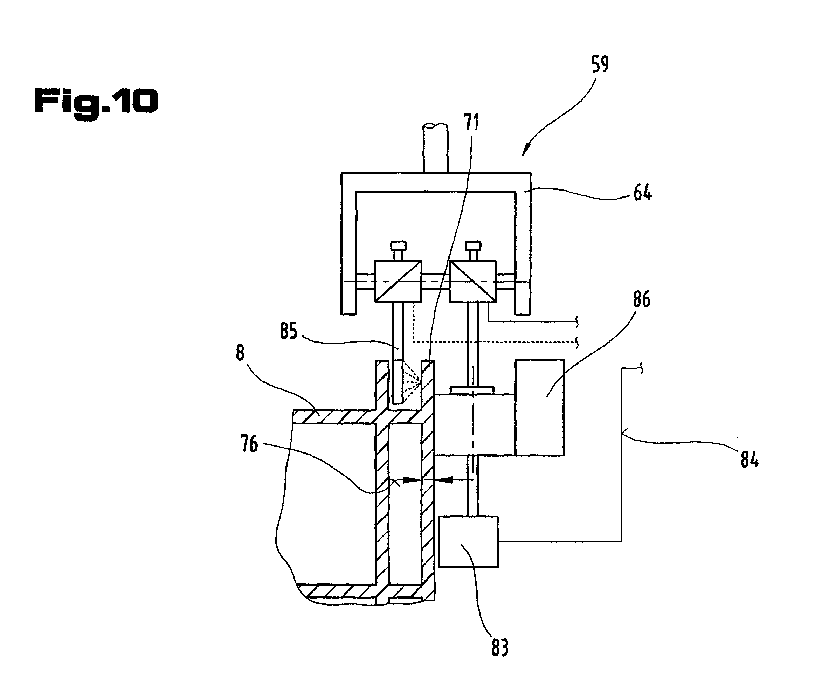

Ist daher damit zu rechnen, daß im Meßbereich größere Temperaturunterschiede über die Meßdauer auftreten und auch größere Unterschiede in der Wandstärke 76, so empfiehlt es sich, diese Veränderungen ebenfalls zu messen. Deswegen ist es, wie beispielsweise in Fig. 10 dargestellt, möglich, auf dem Tragrahmen 64 der Meßvorrichtung 59 zusätzlich oder in unmittelbarer Nachbarschaft davon unabhängig einen Temperatursensor 83 anzuordnen, der über eine Leitung 84 ebenfalls mit der Steuervorrichtung 60 verbunden sein kann, wie Distanzsensoren 85, 86, mit welchen die Wandstärke 76 des Steges 71 fortlaufend gemessen werden kann, sodaß im Online-Betrieb über die Steuervorrichtung 60 bzw. den dort angeordneten Mikroprozessor entsprechend den Softwareinstruktionen oder den im Speicher 78 hinterlegten Werten die jeweiligen Kapazitäten für das Dielektrikum errechnet werden können, sodaß daraus die Kapazität oder die Änderungen der Kapazität in der Kondensatoranordnung immer auf die tatsächlichen Gegebenheiten als Planwert online angepaßt werden können, um damit die darüber hinaus auftretenden Änderungen eindeutig auf die morphologischen Veränderungen im Werkstoff des herzustellenden Gegenstandes 8 beziehen zu können.

Bei dem Temperatursensor 83 und den Distanzsensoren 85, 86 kann es sich sowohl um berührungslos arbeitende Meßsysteme als auch an dem Gegenstand 8, beispielsweise unter Zwischenschaltung eines Flüssigkeitsfilms, anliegende Meßgeräte handeln. Als Temperatursensoren 83 kommen vor allem Infrarotmeßanordnungen in Frage, während für die Distanzmessung selbstverständlich auch Reflexionslichtschranken und dergleichen eingesetzt werden können, wie sie aus dem Stand der Technik sowohl für den Temperatursensor 83 als auch für die Distanzsensoren 85, 86 in vielfältigen Ausführungen aus dem Stand der Technik bekannt sind.

Selbstverständlich ist es auch möglich, - wie in Fig. 8 gezeigt - die Messung oder Veränderung der Kapazität an anderer Stelle als im Bereich des Steges 71 zu ermitteln, beispielsweise über eine Gesamtdicke 87 des Gegenstandes 8, nur ist in diesem Fall dann die Kapazität des Dielektrikums, bestehend aus Luft und den einzelnen Lagen des Gegenstandes 8, mit dessen Wandstärken in die Berechnung exakt miteinzuführen.

Selbstverständlich können anstelle der im Detail beschriebenen Ausführungsvariante, bei welcher die Dielektrizitätszahl als Referenzwert für den Gelierwert herangezogen wird, auch beliebig andere elektrische Kennzahlen verwendet werden, wie beispielsweise die Leitfähigkeit, der Widerstand oder die Veränderung von beliebigen elektrischen oder magnetischen Feldern.

Durch die mit der Steuervorrichtung 60 erarbeiteten Meßwerte ist es nunmehr möglich, unterschiedliche Zustandsgrößen beim Verfahren zu verändern. So ist es beispielsweise möglich, anhand der mit der Steuervorrichtung 60 erarbeiteten Meßwerte den Füllgrad der Aufbereitungseinrichtung 2 im Verhältnis zum Volumenstrom der von der Fördervorrichtung 19 abgegebenen Schmelze zu steuern oder zu regeln.

Selbstverständlich ist es aber auch möglich, die eingebrachte Knet- bzw. Scherarbeit zu verändern und/oder die während der Aufbereitung der Schmelze bzw. dem Rohmaterial oder den Rohmaterialien für die Schmelze, aus der der Gegenstand 8 hergestellt wird.

Ebenso ist es aber auch zusätzlich oder anstelle dessen möglich, die Zeitdauer oder die Art der Homogenisierung des Volumenstromes der Schmelze vor dem Eintritt und/oder nach dem Austritt aus der Fördervorrichtung zu verändern.

Ein wesentlicher Vorteil der Erfindung liegt darin, daß durch die Meßvorrichtung 59 und die Steuervorrichtung 60 über eine Steuerleitung 61 der Antriebsmotor 62 der Aufbereitungseinrichtung 2 und somit die Drehzahl der Extruderschnecken gesteuert werden kann, wodurch auf den Geliergrad der Schmelze in der Aufbereitungseinrichtung 2 Einfluß genommen und dieser abgestimmt werden kann.

Auf Grund dieser prozeßbedingten wesentlichen Kennwerte für die spezifische Antriebsleistung und für die spezifische Heizleistung in Verbindung mit dem erzielbaren Geliergrad bzw. MFI/MVI wird eine rohstoffspezifische Aufbereitung des Rohmaterials für die Schmelze unabhängig von der Ausstoßleistung ermöglicht, wobei dabei vorbestimmbare Produkteigenschaften des Gegenstandes im geformten sowie ausgehärteten Zustand erzielbar sind.

Weiters ist es vorteilhaft, wenn zwischen der Kühlvorrichtung 5 und dem Raupenabzug 7 eine Meßvorrichtung 59 zum Ermitteln der Dielektrizitätszahl des Gegenstandes 8 angeordnet ist und ein Ausgang der Meßvorrichtung 59 an einer Steuervorrichtung 60 angeordnet ist, der einem Speicher 78 und eine Eingabe- und/oder Anzeigevorrichtung zugeordnet sind.

Vorteilhaft ist es auch, wenn die Steuervorrichtung 60 über eine Steuerleitung 61 mit dem Antriebsmotor 62 der Aufbereitungseinrichtung 2 verbunden ist, die Steuervorrichtung 60 über eine Steuerleitung 61 mit den Temperierelementen 21 der Aufbereitungseinrichtung 2 verbunden ist, die Steuervorrichtung 60 mit der Steuervorrichtung 22 schaltungstechnisch, insbesondere über ein Bus-System, verbunden ist, und die Steuervorrichtung 60 in der Steuervorrichtung 22 integriert ist.

Der Ordnung halber sei abschließend darauf hingewiesen, daß zum besseren Verständnis des Aufbaus der Extrusionsanlage 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2, 3, 4, 5, 6, 7; 8; 9; 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | |
|---|---|
| 1 | Extrusionsanlage |
| 2 | Aufbereitungseinrichtung |
| 3 | Formgebungsvorrichtung |
| 4 | Kalibriervorrichtung |
| 5 | Kühlvorrichtung |
| 6 | Extrusionsrichtung |
| 7 | Raupenabzug |
| 8 | Gegenstand |
| 9 | Kalibriertisch |
| 10 | Laufrolle |
| 11 | Fahrschiene |
| 12 | Aufstandsfläche |
| 13 | Kühlkammer |
| 14 | Kunststoff |
| 15 | Aufnahmebehälter |
| 16 | Färderschnecke |
| 17 | Extrusionsanlage |
| 18 | Doppelschneckenextruder |
| 19 | Fördervorrichtung |
| 20 | Homogenisiervorrichtung |
| 21 | Temperierelement |
| 22 | Steuervorrichtung |
| 23 | Sensor |
| 24 | Sensor |
| 25 | Sensor |
| 26 | Sensor |
| 27 | Sensor |
| 28 | Sensor |
| 29 | Sensor |
| 30 | Sensor |
| 31 | Sensor |
| 32 | Sensor |
| 33 | Sensor |
| 34 | Sensor |
| 35 | Sensor |
| 36 | Sensor |
| 37 | Sensor |
| 38 | Auswertevorrichtung |
| 39 | Speichervorrichtung |
| 40 | Ordinate |
| 41 | Abszisse |
| 42 | Diagrammlinie |
| 43 | Diagrammlinie |
| 44 | Diagrammlinie |
| 45 | Ordinate |
| 46 | Abszisse |
| 47 | Diagrammlinie |
| 48 | Diagrammlinie |
| 49 | Diagrammlinie |
| 50 | Ordinate |
| 51 | Abszisse |
| 52 | Diagrammlinie |
| 53 | Diagrammlinie |
| 54 | Diagrammlinie |
| 55 | Ordinate |
| 56 | Abszisse |
| 57 | Diagrammlinie |
| 58 | Diagrammlinie |
| 59 | Meßvorrichtung |
| 60 | Steuervorrichtung |
| 61 | Steuerleitung |
| 62 | Antriebsmotor |
| 63 | |
| 64 | Tragrahmen |
| 65 | Führungsrolle |
| 66 | Seitenfläche |
| 67 | Meßfühler |
| 68 | Meßfühler |
| 69 | Arretiermittel |
| 70 | Teil |
| 71 | Steg |
| 72 | Kondensatorplatte |
| 73 | Kondensatorplatte |
| 74 | Leitung |
| 75 | Leitung |
| 76 | Wandstärke |
| 77 | Distanz |
| 78 | Speicher |
| 79 | Eingabe- und/oder Anzeigevorrichtung |
| 80 | Stellorgan |
| 81 | Anzeigevorrichtung |
| 82 | Diagrammlinie |
| 83 | Temperatursensor |
| 84 | Leitung |
| 85 | Distanzsensor |
| 86 | Distanzsensor |
| 87 | Gesamtdicke |

**Patentansprüche**

1. Verfahren zum Regeln des Geliergrades bzw. MFI/ MVI bzw. der zur Erzielung des Geliergrades eingebrachten spezifischen Energie bei der Plastifizierung von Kunststoffen (14) aus PVC mit einer Kneteinrichtung, **dadurch gekennzeichnet, daß** eine Drehzahl eines Knetwerkzeuges und/oder die Geometrie des Knetwerkzeuges und/ oder das Drehmoment an der Antriebswelle der Kneteinrichtung und/ oder die zugeführte Wärmemenge im Bereich der Plastifizierung des Kunststoffes (14) und/oder der Füllgrad der Aufbereitunseinrichtung (2) in Abhängigkeit vom gewünschten Geliergrad bzw. MFI/MVI festgelegt und bei konstantem Volumenstrom auf diesem Wert gehalten wird.

2. Verfahren zum Regeln des Geliergrades bzw. MFI/MVI bzw. der zur Erzielung des Geliergrades eingebrachten spezifischen Energie bei der Plastifizierung von Kunststoffen (14), aus PVC mit einer Kneteinrichtung, insbesondere nach Anspruch 1, **dadurch gekennzeichnet, daß** die für unterschiedliche Geliergrade erforderlichen Werte für die Drehzahl eines Knetwerkzeuges, und/oder das Drehmoment an der Antriebswelle der Kneteinrichtung, und/oder den Füllgrad bzw, die zugeführte Wärmemenge in Speichervorrichtungen (39) als vorgebbare Sollwerte hinterlegt sind und daß je nach gewünschtem Geliergrad diese Werte in eine Auswertevorrichtung (38) eingelesen bzw. übernommen werden und Istwerte für die Drehzahl eines Knetwerkzeuges, und/oder das Drehmoment an der Antriebswelle der Kneteinrichtung, und/oder den Füllgrad bzw. die zugeführte Wärmemenge ermittelt werden und mittels der Steuervorrichtung (22) und/ oder der Auswertevorrichtung (38) die einzelnen Vorrichtungen der Kneteinrichtung angesteuert und derart verändert werden, daß eine Anpassung der ermittelten Istwerte an die vorgegebenen Sollwerte durchgeführt wird.

3. Verfahren nach Anspruch 1 oder 2, **dadurch gekennzeichnet, daß** der Füllgrad der Aufbereitungseinrichtung (2) mit zu erwärmendem und zu knetendem bzw. scherendem Rohmaterial oder Rohmaterialien bei über eine vorbestimmbare Zeitdauer erhöhten Volumenstrom an zugeführtem Rohmaterial oder Rohmaterialien und gleichbleibendem Schmelzeaustritt erhöht wird.

4. Verfahren nach Anspruch 1 oder 2, **dadurch gekennzeichnet, daß** der Füllgrad der Aufbereitungseinrichtung (2) mit zu erwärmendem und zu knetendem bzw. scherendem Rohmaterial oder Rohmaterialien bei gleichbleibenden Volumenstrom an zugeführtem Rohmaterial oder Rohmaterialien und über eine vorbestimmbare Zeitdauer verringertem Schmelzeaustritt erhöht wird.

5. Verfahren nach Anspruch 1 oder 2, **dadurch gekennzeichnet, daß** der Füllgrad der Aufbereitungseinrichtung (2) mit zu erwärmendem und zu knetendem bzw. scherendem Rohmaterial oder Rohmaterialien bei über eine vorbestimmbare Zeitdauer verringertem Volumenstrom an zugeführtem Rohmaterial oder Rohmaterialien und gleichbleibendem Schmelzeaustritt verringert wird.

6. Verfahren nach Anspruch 1 oder 2, **dadurch gekennzeichnet, daß** der Füllgrad der Aufbereitungseinrichtung (2) mit zu erwärmendem und zu knetendem bzw. scherendem Rohmaterial oder Rohmaterialien bei gleichbleibenden Volumenstrom an zugeführtem Rohmaterial oder Rohmaterialien und über eine vorbestimmbare Zeitdauer erhöhtem Schmelzeaustritt verringert wird.

7. Verfahren nach einem oder mehreren der Ansprüche 1 bis 3, **dadurch gekennzeichnet, daß** durch Erhöhung des zugeführten Volumens des Rohmaterials oder der Rohmaterialien über eine vorbestimmbare Zeiteinheit bei Entnahme der Schmelze mit einem gleichbleibenden Volumenstrom die Verweilzeit vergrößert wird.

8. Verfahren nach einem oder mehreren der Ansprüche 1, 2, 4, **dadurch gekennzeichnet, daß** bei gleichbleibendem Volumensstrom des Rohmaterials oder der Rohmaterialien bei Entnahme der Schmelze über eine vorbestimmbare Zeiteinheit mit einem verringertem Volumenstrom die Verweilzeit vergrößert wird.

9. Verfahren nach einem oder mehreren der Ansprüche 1, 2, 5, **dadurch gekennzeichnet, daß** durch Verringerung des zugeführten Volumens des Rohmaterials oder der Rohmaterialien über eine vorbestimmbare Zeiteinheit bei Entnahme der Schmelze mit einem gleichbleibenden Volumenstrom die Verweilzeit verringert wird.

10. Verfahren nach einem oder mehreren der Ansprüche 1, 2, 6, **dadurch gekennzeichnet, daß** bei gleichbleibendem Volumensstrom des Rohmaterials oder der Rohmaterialien bei Entnahme der Schmelze über eine vorbestimmbare Zeiteinheit mit einem erhöhtem Volumenstrom die Verweilzeit verringert wird.

11. Verfahren nach Anspruch 1 oder 2, **dadurch gekennzeichnet, daß** der Volumenstrom der Schmelze im unmittelbaren Anschluß an den Austritt aus einer Fördervorrichtung (19) gleich dem Volumenstrom des Rohmaterials vor dessen Aufbereitung gehalten wird.

12. Verfahren nach einem oder mehreren der vorhergehenden Ansprüche, **dadurch gekennzeichnet, daß** der aus der Fördervorrichtung (19) austretende Volumenstrom der Schmelze vor dem Eintritt in eine Formgebungsvorrichtung (3) homogenisiert wird.

**13.** Verfahren zum Ermitteln und/oder Verändern des Geliergrades bzw. MFI/MVI, der zur Erzielung des Geliergrades eingebrachten spezifischen Energie bei der Plastifizierung von Kunststoffen (14) aus PVC, mit einer Kneteinrichtung, insbesondere nach Anspruch 1 oder 2, **dadurch gekennzeichnet, daß** nach dem Abkühlen und Kalibrieren des aus dem Kunststoff (14) hergestellten Gegenstandes (8) ein elektrischer Kennwert des Materials des Gegenstandes (8) festgestellt und/oder daß vor dem Schmelzeaustritt aus der Formgebungsvorrichtung (3) ein elektrischer Kennwert der Schmelze ermittelt wird.

**14.** Verfahren nach Anspruch 13, **dadurch gekennzeichnet, daß** die Feststellung des elektrischen Kennwertes kontinuierlich im Zuge der fortlaufenden Herstellung des Gegenstandes (8) erfolgt.

**15.** Verfahren nach Anspruch 13, **dadurch gekennzeichnet, daß** die Dielektrizitätszahl des Material kapazitiv ermittelt wird.

**16.** Verfahren nach Anspruch 13 oder 14, **dadurch gekennzeichnet, daß** im Bereich der Ermittlung der Dielektrizitätszahl eine Wandstärke (76) des Gegenstandes (8) ermittelt wird.

**17.** Verfahren nach Anspruch 13 oder 14, **dadurch gekennzeichnet, daß** im Bereich der Messung der Dielektrizitätszahl die Temperatur des Gegenstandes (8) ermittelt wird.

**18.** Verfahren nach einem oder mehreren der Ansprüche 13 bis 15, **dadurch gekennzeichnet, daß** die Messung der Dielektrizitätszahl vor dem Austritt der Schmelze aus der Formgebungsvorrichtung (3) durchgeführt wird.

**Claims**

**1.** Method of controlling the degree of gelling or MFI/MVI or the specific energy applied in order to achieve a degree of gelling during plasticization of plastics materials (14) of PVC with a kneader, **characterised in that** a speed of a kneading tool and/or the geometry of the kneading tool and/or the torque on the drive shaft of the kneader andlor the amount of heat applied in the region where the plastics material (14) is plasticized and/or the level to which the conditioning unit (2) is filled is fixed, depending on the desired degree of gelling or MFI/MVI, and maintained at this value for a constant volumetric flow.

**2.** Method of controlling the degree of gelling or MFI/MVI or the specific energy applied in order to achieve a degree of gelling during plasticization of plastics materials (14) of PVC with a kneader, in particular as claimed in claim 1, **characterised in that** the values needed for the differing degrees of gelling are stored in memory devices (39) as predeterminable desired values for the speed of a kneader tool and/or the torque on the drive shaft of the kneader and/or the level or the amount of heat applied and, depending on the desired degree of gelling, these values are read into or picked up by an evaluating device (38) and actual values are detected for the speed of a kneading tool and/or the torque on the drive shaft of the kneader and/or the level or the amount of heat applied, and the individual devices of the kneader are activated and varied by means of the control system (22) and/or the evaluating device (38) so as to adapt the detected actual values to the pre-set desired values.

**3.** Method as claimed in claim 1 or 2, **characterised in that** the level to which the conditioning unit (2) is filled with raw material or raw materials to be heated and kneaded or sheared is raised over a predeterminable period during which the volumetric flow of raw material or raw materials introduced is increased and the discharge of melt kept constant.

**4.** Method as claimed in claim 1 or 2, **characterised in that** the level to which the conditioning unit (2) is filled with raw material or raw materials to be heated and kneaded or sheared is raised by maintaining a constant volumetric flow of raw material or raw materials introduced and reducing the discharge of melt for a predeterminable period.

**5.** Method as claimed in claim 1 or 2, **characterised in that** the level to which the conditioning unit (2) is filled with raw material or raw materials to be heated and kneaded or sheared is reduced for a predeterminable period during which the volumetric flow of raw material or raw materials introduced is reduced and the output of melt kept constant.

**6.** Method as claimed in claim 1 or 2, **characterised in that** the level to which the conditioning unit (2) is filled with raw material or raw materials to be heated and kneaded or sheared is reduced by maintaining a constant volumetric flow of raw material or raw materials introduced and increasing the discharge of melt for a predeterminable period.

**7.** Method as claimed in one or more of claims 1 to 3, **characterised in that** the dwell time is increased by increasing the volume of raw material or raw materials introduced for a predeterminable unit of time whilst discharging the melt at a constant volumetric flow.

**8.** Method as claimed in one or more of claims 1, 2, 4, **characterised in that** the dwell time is increased by operating a constant volumetric flow of the raw material or raw materials whilst discharging the melt at a reduced volumetric flow for a predeterminable unit of time.

**9.** Method as claimed in one or more of claims 1, 2, 5, **characterised in that** the dwell time is reduced by reducing the volume of raw material or raw materials introduced for a predeterminable unit of time whilst discharging the melt at a constant volumetric flow.

**10.** Method as claimed in one or more of claims 1, 2, 6, **characterised in that** the dwell time is reduced by operating a constant volumetric flow of the raw material or raw materials whilst discharging the melt at an increased volumetric flow for a predeterminable unit of time.

**11.** Method as claimed in claim 1 or 2, **characterised in that** the volumetric flow of melt in the area immediately adjoining the outlet of a conveyor device (19) is kept at a volumetric flow identical to that of the raw material prior to its conditioning.

**12.** Method as claimed in one or more of the preceding claims, **characterised in that** the mass flow of melt leaving the conveyor device (19) is homogenised before entering a shaping device (3).

**13.** Method of detecting and/or varying the degree of gelling or MFI/MVI or the specific energy applied to achieve the degree of gelling during plasticization of plastics materials (14) of PVC with a kneader, in particular as claimed in claim 1 or 2, **characterised in that**, after cooling and calibrating the object (8) produced from the plastics material (14), an electric characteristic value of the material of the object (8) is determined and/or an electric characteristic value of the melt is detected before the melt leaves the shaping device (3).

**14.** Method as claimed in claim 13, **characterised in that** the electric characteristic value is continuously determined during the course of continuous production of the object (8).

**15.** Method as claimed in claim 13, **characterised in that** the dielectric constant of the material is detected by capacitive means.

**16.** Method as claimed in claim 13 or 14, **characterised in that** a wall thickness (76) of the object (8) is detected in the region where the dielectric constant is detected.

**17.** Method as claimed in claim 13 or 14, **characterised in that** the temperature of the object (8) is detected in the region where the dielectric constant is measured.

**18.** Method as claimed in one or more of claims 13 to 15, **characterised in that** the dielectric constant is measured before the melt is discharged from the shaping device (3).

**Revendications**

**1.** Procédé pour régler le degré de gélification ou respectivement MFI/MVI ou respectivement l'énergie spécifique introduite pour obtenir le degré de gélification dans la plastification de matières synthétiques (14) en PVC avec un système de pétrissage, **caractérisé en ce qu'**un nombre de tours d'un outil de pétrissage et/ou la géométrie de l'outil de pétrissage et/ou le moment de torsion sur l'arbre d'entraînement du système de pétrissage et/ou la quantité de chaleur amenée dans la zone de plastification de la matière synthétique (14) et/ou le degré de remplissage de l'installation de traitement (2) est établi en fonction du degré souhaité de gélification ou respectivement MFI/MVI et est maintenu, pour un courant volumétrique constant, à cette valeur.

**2.** Procédé pour régler le degré de gélification ou respectivement MFI/MVI ou respectivement l'énergie spécifique introduite pour l'obtention du degré de gélification dans la plastification de matières synthétiques (14), en PVC avec un système de pétrissage, en particulier selon la revendication 1, **caractérisé en ce que** les valeurs nécessaires pour divers degrés de gélification pour le nombre de tours d'un outil de pétrissage, et/ou le moment de torsion sur l'arbre d'entraînement du système de pétrissage et/ou le degré de remplissage ou respectivement la quantité de chaleur introduite dans les dispositifs d'emmagasinage (39) sont déposées en tant que valeurs prédéterminées et **en ce que**, selon le degré souhaité de gélification, ces valeurs sont introduites dans un dispositif d'évaluation (38) ou respectivement y sont reçues et les valeurs réelles pour le nombre de tours d'un outil de pétrissage et/ou le moment de torsion sur l'arbre d'entraînement du système de pétrissage et/ou le degré de remplissage ou respectivement la quantité de chaleur amenée sont obtenues et au moyen du dispositif de commande (22) et/ou du dispositif d'évaluation (38), les dispositifs individuels du système de pétrissage sont contrôlés et modifiés de façon qu'une adaptation des valeurs réelles obtenues sur les valeurs prédéterminées de consigne soit accomplie.

**3.** Procédé selon la revendication 1 ou 2, **caractérisé**

**en ce que** le degré de remplissage du système de traitement (2) est augmenté de la matière première à chauffer et à pétrir ou à cisailler où les matières premières pour un courant volumétrique augmenté pendant une durée prédéterminée en matière première ou matières premières introduites et pour une sortie identique du produit fondu.

4. Procédé selon la revendication 1 ou 2, **caractérisé en ce que** le degré de remplissage du système de traitement (2) est diminué en matière première ou matières premières à chauffer et à pétrir ou respectivement à cisailler pour un courant volumétrique identique de matière première ou de matières premières introduites et une sortie du produit fondu diminuée sur une durée prédéterminée.

5. Procédé selon la revendication 1 ou 2, **caractérisé en ce que** le degré de remplissage du système de traitement (2) par la matière première ou les matières premières à chauffer et à pétrir ou à cisailler pour un courant volumétrique diminué pendant une durée prédéterminée, est diminué en matière première ou matières premières introduites avec une sortie du produit fondu identique.

6. Procédé selon la revendication 1 ou 2, **caractérisé en ce que** le degré de remplissage du système de traitement (2) par la matière première ou les matières premières à chauffer et à pétrir ou à cisailler est diminué pour un courant volumétrique identique en matière première ou matières premières à amener et pour une sortie du produit fondu augmentée sur une durée prédéterminée.

7. Procédé selon l'une quelconque des revendications 1 à 3, **caractérisé en ce que**, par l'augmentation du volume introduit de la matière première ou des matières premières sur une unité prédéterminée de temps, lors du prélèvement du produit fondu avec un courant volumétrique restant identique, le temps de résidence est augmenté.

8. Procédé selon l'une quelconque des revendications 1, 2, 4, **caractérisé en ce que**, pour un courant volumétrique de la matière première ou des matières premières qui reste indentique, lors du prélèvement du produit fondu sur une unité prédéterminée de temps avec un courant volumétrique diminué, le temps de résidence est augmenté.

9. Procédé selon une ou plusieurs des revendications 1, 2, 5, **caractérisé en ce que**, par diminution du volume introduit de la matière première ou des matières premières sur une unité prédéterminée de temps, lors du prélèvement du produit fondu, avec un courant volumétrique qui reste identique, le temps de résidence est diminué.

10. Procédé selon une ou plusieurs des revendications 1, 2, 6, **caractérisé en ce que**, pour un courant volumétrique de la matière première ou des matières premières qui reste identique, lors du prélèvement du produit fondu sur une unité prédéterminée de temps, avec un courant volumétrique augmenté, le temps de résidence est diminué.

11. Procédé selon la revendication 1 ou 2, **caractérisé en ce que** le courant volumétrique du produit fondu, en connexion directe à la sortie d'un dispositif d'alimentation (19) est maintenu égal au courant volumétrique de la matière première avant son traitement.

12. Procédé selon une ou plusieurs des revendications précédentes, **caractérisé en ce que** le courant volumétrique du produit fondu sortant du dispositif d'alimentation (19) est homogénéisé avant entrée dans un dispositif de formage (3).

13. Procédé pour obtenir et/ou modifier le degré de gélification ou respectivement ou MFI/MVI, l'énergie spécifique introduite pour l'obtention du degré de gélification dans la plastification de matières synthétiques (14) en PVC avec un système de pétrissage, en particulier selon la revendication 1 ou 2, **caractérisé en ce qu'**après refroidissement et calibrage de l'objet (8) produit à partir de la matière synthétique (14), une caractéristique électrique du matériau de l'objet (8) est établie et/ou **en ce qu'**une caractéristique électrique du produit fondu est obtenue avant la sortie du produit fondu du dispositif de formage (3).

14. Procédé selon la revendication 13, **caractérisé en ce que** l'établissement de la caractéristique électrique se produit continuellement au cours de la fabrication continue de l'objet (8).

15. Procédé selon la revendication 13, **caractérisé en ce que** la constante diélectrique du matériau est obtenue par voie capacitive.

16. Procédé selon la revendication 13 ou 14, **caractérisé en ce que**, dans le domaine de l'obtention de la constante diélectrique, une épaisseur de paroi (76) de l'objet (8) est obtenue.

17. Procédé selon la revendication 13 ou 14, **caractérisé en ce que**, dans la zone de la mesure de la constante diélectrique, la température de l'objet (8) est obtenue.

18. Procédé selon une ou plusieurs des revendications 13 à 15, **caractérisé en ce que** la mesure de la constante diélectrique est accomplie avant la sortie du produit fondu du dispositif de formage (3).

# Fig.1

EP 1 105 278 B1

# Fig.2

EP 1 105 278 B1

Fig.3

Fig.4

EP 1 105 278 B1

Fig.5

# Fig.6

EP 1 105 278 B1

# Fig.7

EP 1 105 278 B1

Fig.8

EP 1 105 278 B1

Fig.9

Fig.10

EP 1 105 278 B1